# EUROPÄISCHE PATENTSCHRIFT

(11) **EP 1 319 307 B1**
(45) Veröffentlichungstag und Bekanntmachung des Hinweises auf die Patenterteilung: **15.05.2013**
(21) Anmeldenummer: 01962665.4
(22) Anmeldetag: 20.08.2001
(51) Int. Cl.: H04W 4/12

(54) **ABRECHNUNG VON DATENÜBERTRAGUNGSKOSTEN IN EINEM MOBILFUNKNETZ**
ACCOUNTING OF DATA TRANSMISSION COSTS IN A MOBILE RADIOTELEPHONE NETWORK
DECOMPTE DES COUTS DE TRANSMISSION DE DONNEES DANS UN RESEAU DE TELEPHONIE MOBILE

(30) Priorität: 22.09.2000 DE 10047128; 09.10.2000 DE 10049802; 09.01.2001 DE 10100610; 13.02.2001 EP 01103357
(43) Veröffentlichungstag der Anmeldung: 18.06.2003
(73) Patentinhaber: Siemens Aktiengesellschaft, 80333 München (DE)
(72) Erfinder: SCHMIDT, Gunnar, 38304 Wolfenbüttel (DE); LAUMEN, Josef, 31141 Hildesheim (DE); SCHMIDT, Andreas, 38114 Braunschweig (DE)
(86) Internationale Anmeldenummer: PCT/DE2001/003175
(87) Internationale Veröffentlichungsnummer: WO 2002/025921

(56) Entgegenhaltungen:
- EP-A- 0 753 957
- WO-A-98/09451
- "UNIVERSAL MOBILE TELECOMMUNICATIONS SYSTEM (UMTS) MULTIMEDIA MESSAGING SERVICE (MMS), FUNCTIONAL DESCRIPTION STAGE 2" ETSI TS 123 140 V3.0.1, XX, XX, März 2000 (2000-03), Seiten 6-17, XP002948976

## Beschreibung

Die Erfindung betrifft ein Verfahren zur Abrechnung von Datenübertragungskosten in einem Mobilfunknetz nach dem Oberbegriff des Anspruchs 1 sowie ein zugehöriger Mobiltelekommunikationsgerät nach Anspruch 19.

Bisherige Mobilfunknetze, wie etwa das nach dem GSM-standard arbeitende Netz, eröffnen noch recht eingeschränkte Möglichkeiten zur Übertragung nicht gesprochener Nachrichten, etwa von Textdaten. So können etwa bis zu 160 Zeichen umfassende Kurznachrichten als Texte übertragen werden. Diese Einrichtung wird als SMS (Short message Service) bezeichnet. Für die Kosten des Versands derartiger Textnachrichten hat der Datenversender aufzukommen.

Aus der EP 0 753 957 A2 ist ein Vergebührungsverfahren bekannt, bei dem ein GSM-Teilnehmer als Sender eine SMS-Nachricht an einen Internet-Teilnehmer als Empfänger sendet. Der GSM-Teilnehmer kann im Textfeld, d. h- in den Nutzdaten, der übermittelten SMS-Nachricht zusätzlich eine Antwortbriefmarke auf seine Kosten einfügen. Fügt der Empfänger diese Freimarke in einer SMS-Rückantwort an den ursprünglichen Sender im Antworttext ein, so bleibt diese für ihn kostenfrei.

Die WO 00/41415 betrifft lediglich ein Abstimmverfahren zur Einholung von Antworten von Kobilfunkgeräte-Teilnehmern auf eine Anfrage via SMS-Nachrichten. Dabei wird der jeweilig antwortende Mobilfunkgeräte-Teilnehmer für seine SMS-Rückantwort ggf. nicht vergebührt.

Ein entsprechendes Abstsimmverfahren stellt auch die WO 98/09451 auf der Basis von SMS bereit, bei dem auf dem Konto des Befragten eine Gutschrift für das zurücksenden einer Antwort, z. B. auf eine Meinungsumfrage an deren Absender aufgenommen wird.

Zukünftig soll auch eine Übertragung von Multimediadaten, insbesondere stehenden oder bewegten Bildern mit oder ohne Ton, möglich sein. Es ist mit einer erheblichen Ausweitung der Datenübertragungsmengen innerhalb solcher Übertragungen sowie mit einer erheblichen Steigerung der Zahl der übertragenen Nachrichten zu rechnen, was insgesamt mit einer Kostensteigerung einhergeht.

Ein Ubermittlungsdienst für Multimediadaten ist beispielsweise der sogenannte Multimedia Messaging Service (MMS) im UMTS (Universal Mobile Telecommunication Service)-Funkkommunikationssystem. Einzelheiten dazu finden sich in der Spezifixation ETSI TS 123 140 V3.0.1 Universal Mobile Telecommunications System (UMTS); Multimedia Messaging Service (MMS), Functional description; stage 2 (e G TS 23.140 version 3.0.1 Release 1999).

Der Erfindung liegt das Problem zugrunde, die Kostenkontrolle und -beeinflussung für Teilnehmer eines Mobilfunknetzes zu vereinfachen.

Die Erfindung löst dieses Problem durch ein Verfahren mit den Merkmalen des Anspruchs 1 oder 2 sowie durch ein Mobiltelekommunikationsgerät mit den Merkmalen des Anspruchs 20 oder 21.

Hinsichtlich vorteilhafter Ausgestaltungen wird auf die Ansprüche 3 bis 19 und 22 bis 25 verwiesen.

Mit dem erfindungsgemäßen Verfahren ist die Möglichkeit geschaffen, für einen Datenempfänger erhaltene Daten kostenfrei zu beantworten. Dadurch ist für den Datenversender beispielsweise die Durchführung von umfragen eröffnet, die bisher immer eine Kostenübernahme von Antwortnachrichten durch die Antwortenden erfordert hätte, was zu einer geringen Rücklaufquote führt. Erfindungsgemäß ist für den Empfänger die Kostenfreiheit seiner Antwort unzweifelhaft ermöglicht, wodurch diesem die Kostenkontrolle erleichtert ist.

Wenn das Kostensignal vom Sender einstellbar ist, kann dieser auswählen, auch einzelfallbezogen, ob er die Kosten einer oder eventuell mehrerer möglicher Antwortnachrichten übernehmen will.

In Weiterbildung der Erfindung wird dem Sender vom Service-Provider mitgeteilt, welche Kosten er für die Übernahme der Antwortkosten - beispielsweise minimal oder maximal - zu erwarten hat. Dieser Wert kann beim Service-Provider berechnet werden und etwa davon abhängig sein, an wieviele Empfänger Daten übertragen werden.

Besonders vorteilhaft kann vom Datenversender eine Zeitdauer bestimmt werden, innerhalb deren die Antwort erfolgen muß, um noch der Kostenübernahme zu unterfallen. Damit kann gezielt vom Datenversender eine Limitierung der möglichen Kosten vorgenommen werden, ohne daß für den einzelnen Empfänger eine Unsicherheit entstünde, ob seine jeweilige Antwort noch von der Kostenübernahme gedeckt ist. Auch kann mit gleicher Zielsetzung die erlaubte Anzahl der Antworten eines jeweiligen Empfängers begrenzt werden.

Eine besonders effektive Möglichkeit der Kostensteuerung ergibt sich, wenn vom Datenversender die möglichen Empfänger in Gruppen eingeteilt werden und dann diesen Gruppen jeweils bestimmte Parameter für die Übernahme von Antwortkosten zugeordnet werden. Es ist dann beispielsweise möglich, Stammkunden andere Kostenübernahmekonditionen zuzuordnen als Neukunden, beispielsweise für Stammkunden die kostenfreie Antwortzeit zu verlängern.

Insgesamt kann damit eine vom Versender genau kontrollierbare und daher auch für Massenübertragungen, wie etwa TED-Umfragen oder den Verkauf über Telefonmarketing, geeignete Kostenübernahme für die Reaktionen des Empfängers erreicht werden.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Abbildung von einer Datenübertragung zugeordneten Sendungen gemäß dem WAP-Standard (Wireless application protocoll) zwischen der Ebene des Versenders und der des Providers einerseits und der Ebene des Providers und der des Empfängers andererseits,
- Fig. 2: eine ähnliche Darstellung wie Fig. 1 mit einer zusätzlich auf die Datenübertragung folgenden Antwort des ursprünglichen Empfängers,
- Fig. 3: die Sendung M-send.req nach dem WAP-Protokoll,
- Fig. 4: die Sendung M-send.req mit der erfindungsgemäßen Ergänzung eines Kostensignals (grau unterlegt),
- Fig. 5: die Sendung M-send.conf nach dem WAP-Protokoll,
- Fig. 6: die Sendung M-send.conf mit der erfindungsgemäßen Ergänzung eines Kostensignals (grau unterlegt),
- Fig. 7: die Sendung M-Notification.ind nach dem WAP-Protokoll,
- Fig. 8: die Sendung M-Notification.ind mit der erfindungsgemäßen Ergänzung eines Kostensignals (grau unterlegt),
- Fig. 9: die Sendung M-Retrieve.conf nach dem WAP-Protokoll,
- Fig. 10: die Sendung M-Retrieve.conf mit der erfindungsgemäßen Ergänzung eines Kostensignals (grau unterlegt),
- Fig. 11: die Belegung (Encodierung) von Feldern für das Kostensignal nach den vorangegangenen Figuren,
- Fig. 12: die Adressierung der erfindungsgemäß zusätzlichen Header-fields,

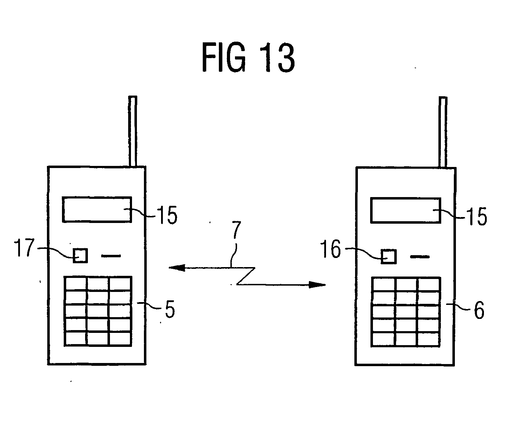

- Fig. 13: eine prinzipielle Darstellung der Datenübertragung mit erfindungsgemäßen Mobiltelekommunikationsgeräten.

Im Ausführungsbeispiel ist die Anwendung der Erfindung auf ein Datenübertragungsschema 1 für den WAP-Standard, wie es in der Übertragung von insbesondere Bilddaten und formatierten Textdaten im UMTS-Standard (Universal mobile telecommunication standard) Verwendung finden wird, beschrieben. Es versteht sich, daß die Erfindung auch auf andere Standards übertragbar ist.

Im UMTS-Standard ist vorgesehen, zusätzlich zum bisherigen SMS (Short Message Service) einen sogenannten MMS (Multimedia Messaging Service) für die Übertragung von nicht gesprochenen Nachrichten vorzusehen. Damit können auch formatierte Texte und Bilder übertragen werden. Die im SMS vorhandene Beschränkung auf eine Nachrichtenlänge von 160 Zeichen entfällt. Eine Übertragung von Audio- und Videonachrichten ist möglich.

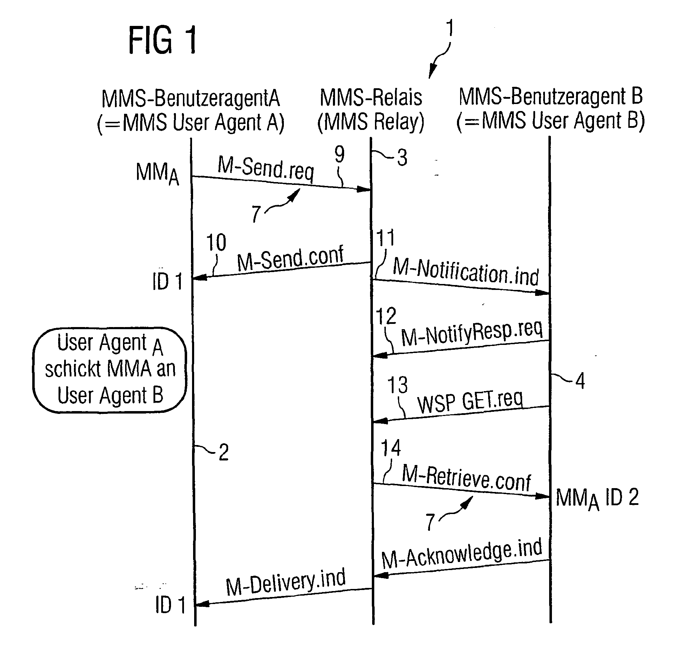

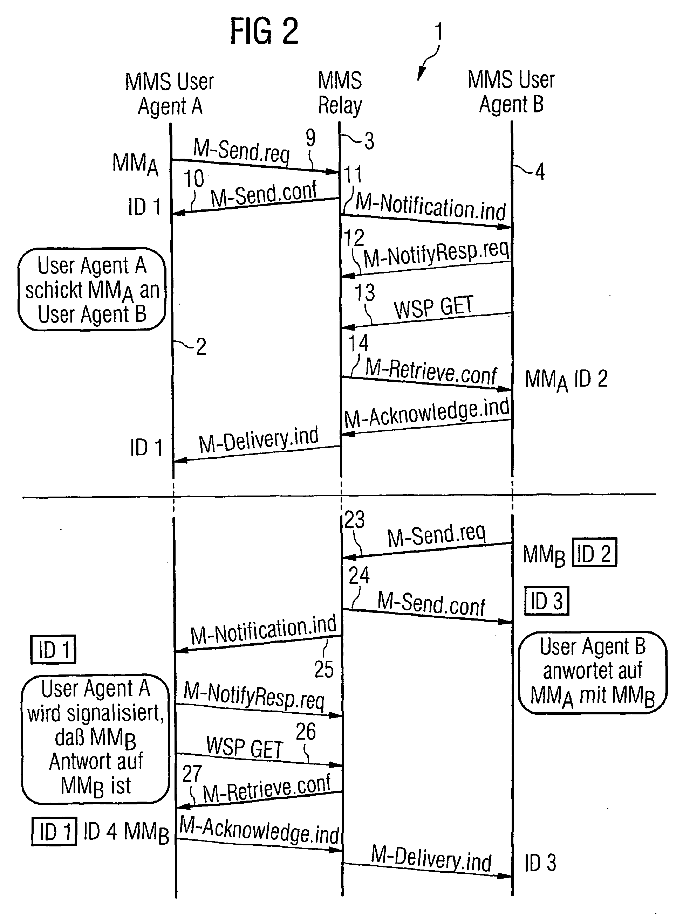

MMS ist über die Nutzung von WAP realisierbar. Dabei wird für die Funkübertragung von Daten, etwa von Multimedia Messages (MMs), das in Fig. 1 für eine einseitige Datenübertragung und in Fig. 2 unter Hinzufügung der Übersendung einer Antwort dargestellte Protokollschema (WAP WSP: Wireless Session Protocoll) angewandt. Dieses umfaßt eine Ebene 2 eines Datenversenders (MMS user agent A), eine Ebene 3 eines Providers (MMS Relay) und eine Ebene 4 eines Empfängers (MMS user agent B). Die Ebene 2 des Datenversenders umfaßt zumindest ein Telekommunikationsgerät 5, ebenso umfaßt die Ebene 4 des Empfängers ein Telekommunikationsgerät 6. Diese Telekommunikationsgeräte 5,6 können beispielsweise als übliche Handies oder als Geräte mit weiteren Eingabe- oder Anzeigefunktionen, wie etwa Laptops, ausgebildet sein.

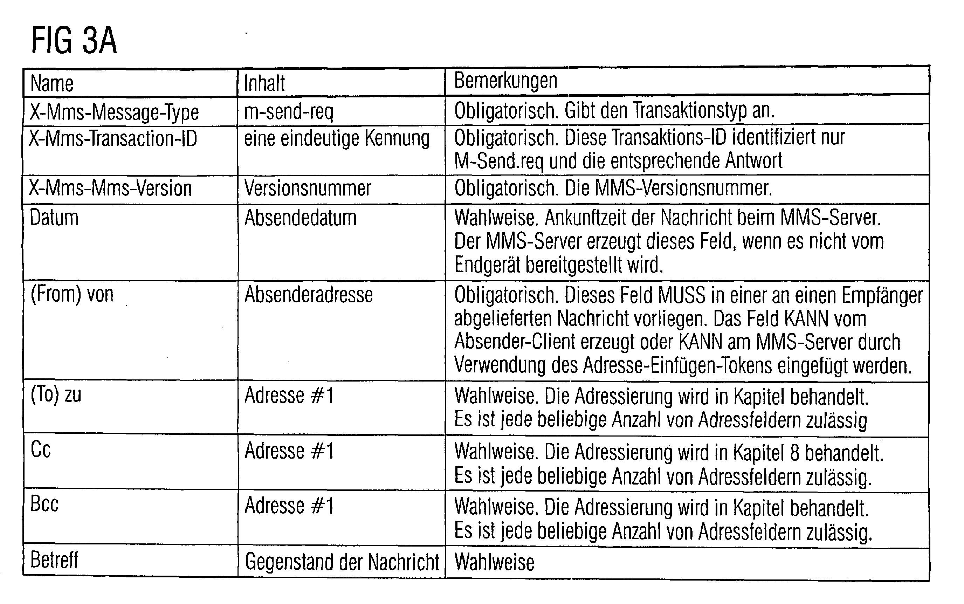

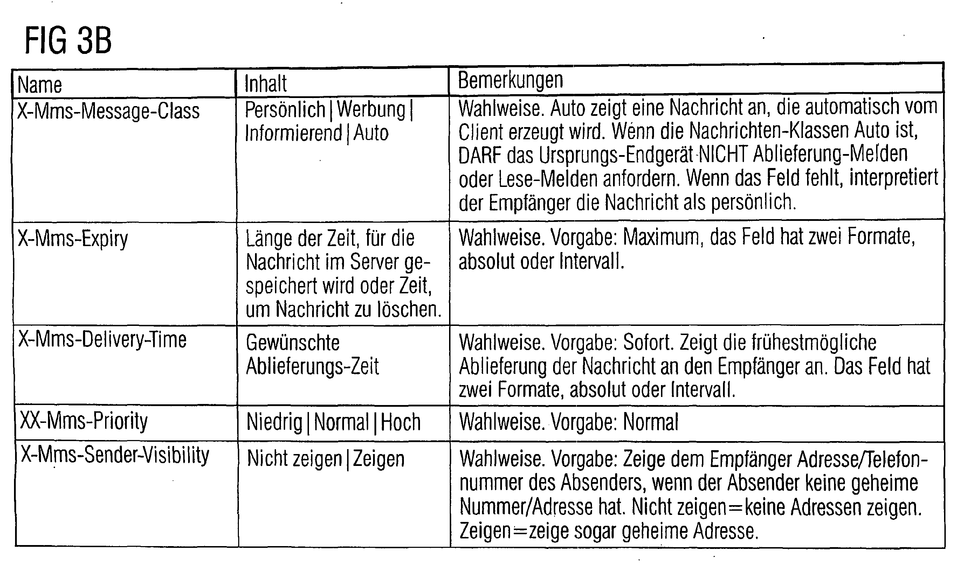

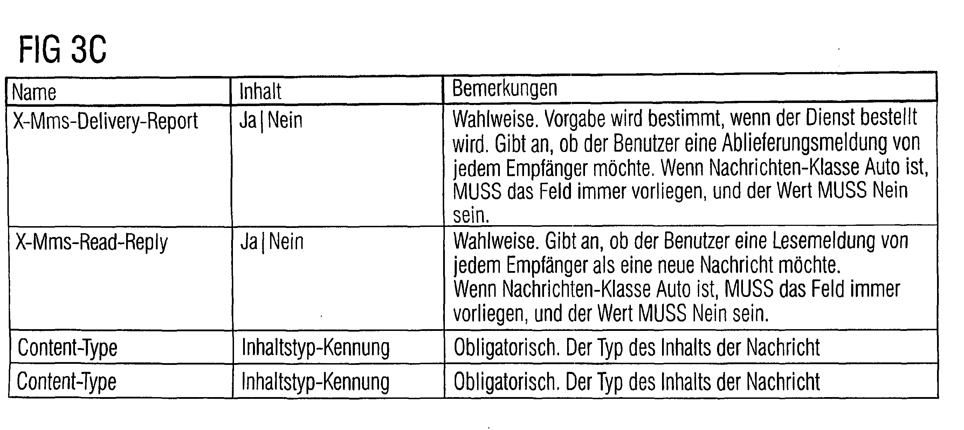

Ein im Telekommunikationsgerät 5 des Versenders verfaßter oder über dieses weiterzuleitender Datensatz 7 wird zunächst als Sendung 9 (diese trägt im WAP-Protokoll den Namen M-Send.req und ist in seiner Ausbildung ohne die erfindungsgemäßen Erweiterungen in Fig. 3 dargestellt) an den Provider (Ebene 3) versandt.

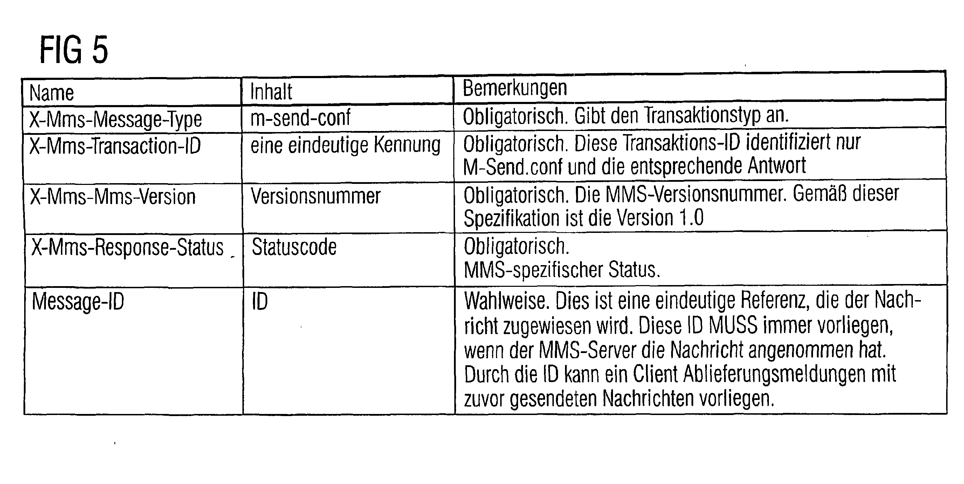

Von dort wird die eingegangene Sendung mit der Rücksendung 10 (im WAP-Standard als M-send.conf bezeichnet und in bisheriger Ausgestaltung in Fig. 5 dargestellt) an den Versender (Ebene 2) quittiert.

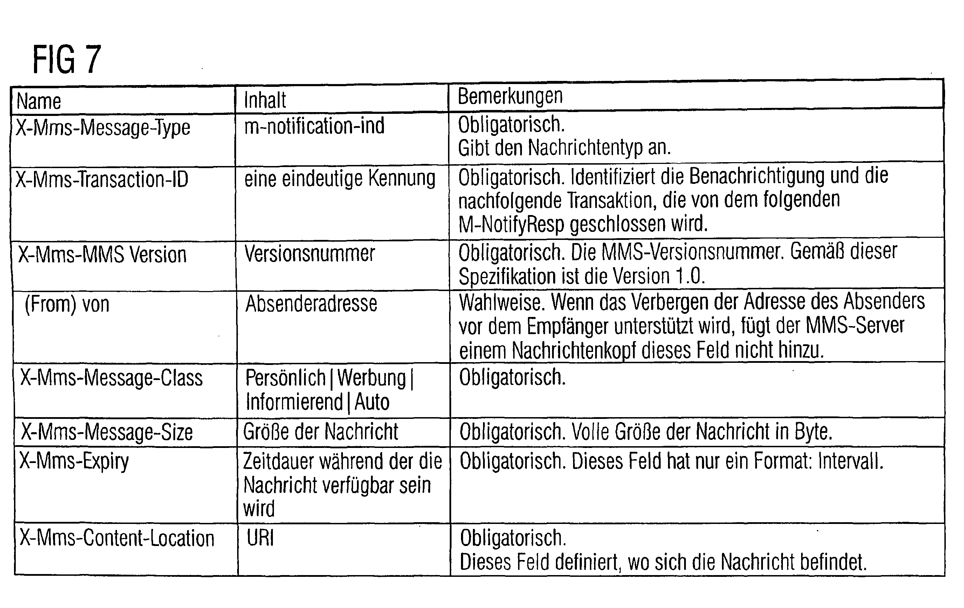

Zeitlich darauffolgend wird vom Provider 3 die Information 11 (M-Notification.ind, Fig. 7) an den Empfänger (Ebene 4) gesandt, mit der dieser darüber informiert wird, daß für ihn eine Nachricht beim Provider 3 zum Herunterladen bereitliegt.

Hierüber erhält der Provider 3 beispielsweise automatisch die quittierende Rückmeldung 12 (M-NotifyResp.req) vom Telekommunikationsgerät 6 des Empfängers (Ebene 4).

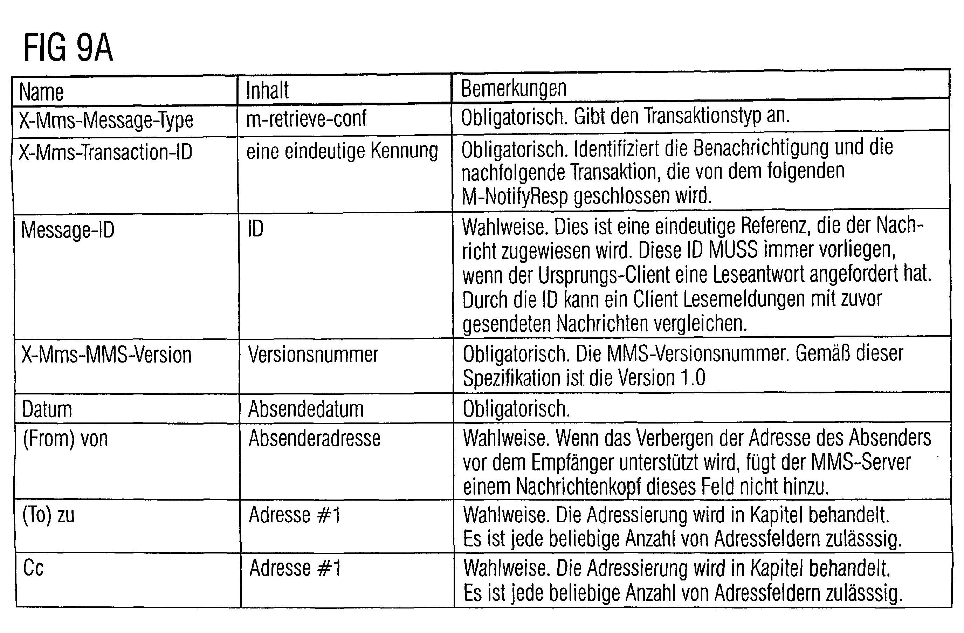

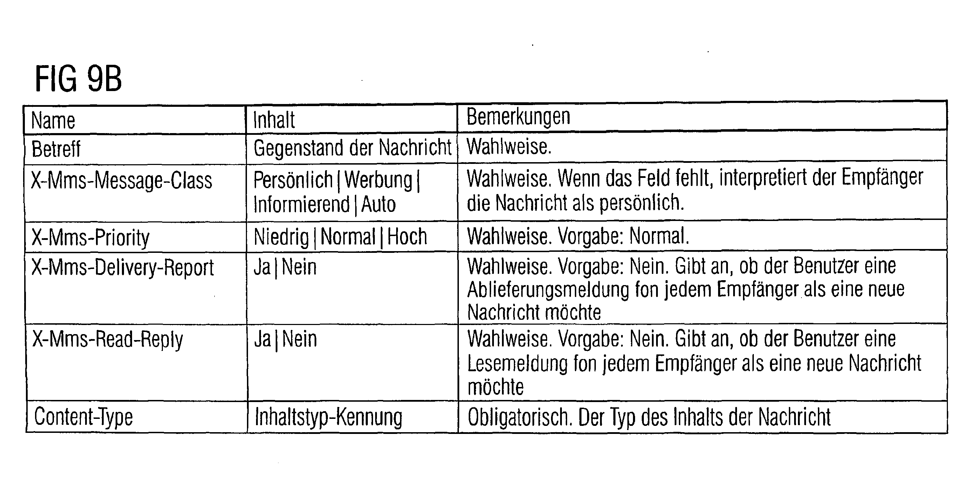

Erst auf Anforderung durch den Empfänger mit der Sendung 13 (WSP GET.req) wird vom Provider 3 der Datensatz 7 mit der Sendung 14 (M-retrieve.conf, Fig. 9) an den Empfänger (Ebene 4) weitergeleitet.

Zur Verwaltung der Sendungen 9, 10, 11, 12, 14 dienen die sog. Header-fields, also dem eigentlichen Datensatz 7 vorangestellte Felder, in denen Informationen über die Herkunft, Sendezeit, Dateigröße und weitere Details enthalten sind. Erfindungsgemäß ist die Anzahl der Header-fields erhöht, um zumindest ein weiteres Feld als Informations- und Steuerfeld nutzen zu können und darin ein Kostensignal für die Bereitschaft zur Übernahme von Kosten der Rücksendung einer Antwort (Fig. 2) vom Empfänger 4 zurück zum ursprünglichen Datenversender 2 aufnehmen zu können.

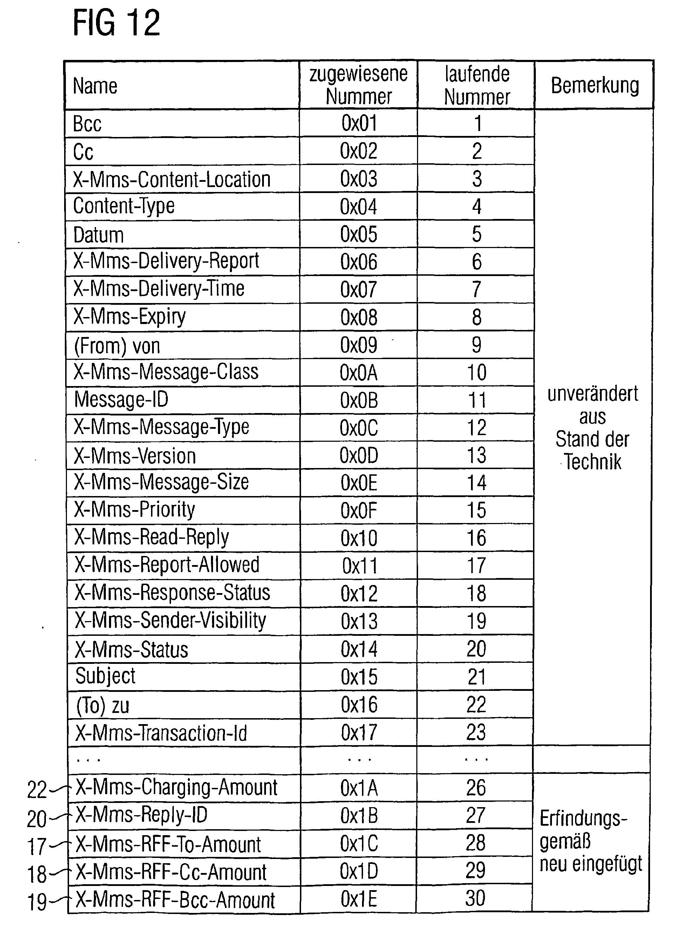

Im Ausführungsbeispiel sind dafür die mit den Bezugszeichen 17, 18, 19, 20 bezeichneten Header-fields 0x1B bis 0x1E belegt (Fig. 12). Die Felder 0x1C bis 0x1E enthalten dabei Information über unterschiedliche, jeweils Empfängergruppen angepaßte Kostenübernahmen (sh. unten), das Feld 0x1B enthält ein Identifizierungssignal für die Antwort, um diese damit einem vorab erhaltenen Datensatz 7 zuordnen zu können. Das mit 22 bezeichnete Feld 0x1A enthält eine Information über die zu erwartenden Kosten (sh. unten).

Der Versender (Ebene 2) kann an seinem Telekommunikationsgerät 5 einen hardwareseitig oder insbesondere softwareseitig und über die ohnehin vorhandene Tastatur zu bedienenden Schalter oder dergleichen Eingabemittel 16 betätigen, um damit die Kostenübernahme für eine oder mehrere Antworten einzustellen. Alternativ kann auch durch eine Vereinbarung mit dem Service-Provider 3, die etwa vor Datensendungen aktualisiert werden kann, von diesem die Einstellung vorgenommen werden.

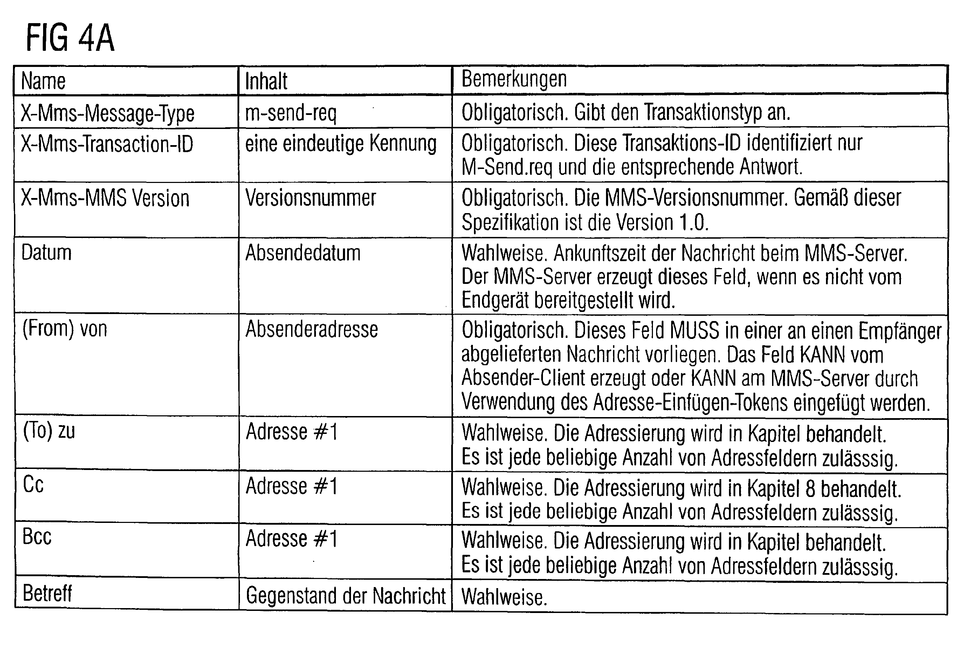

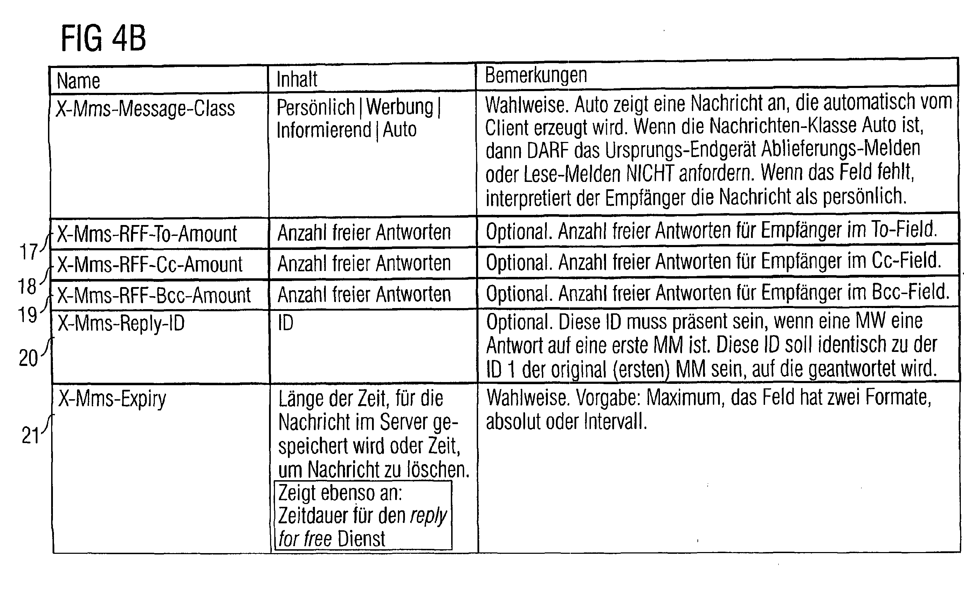

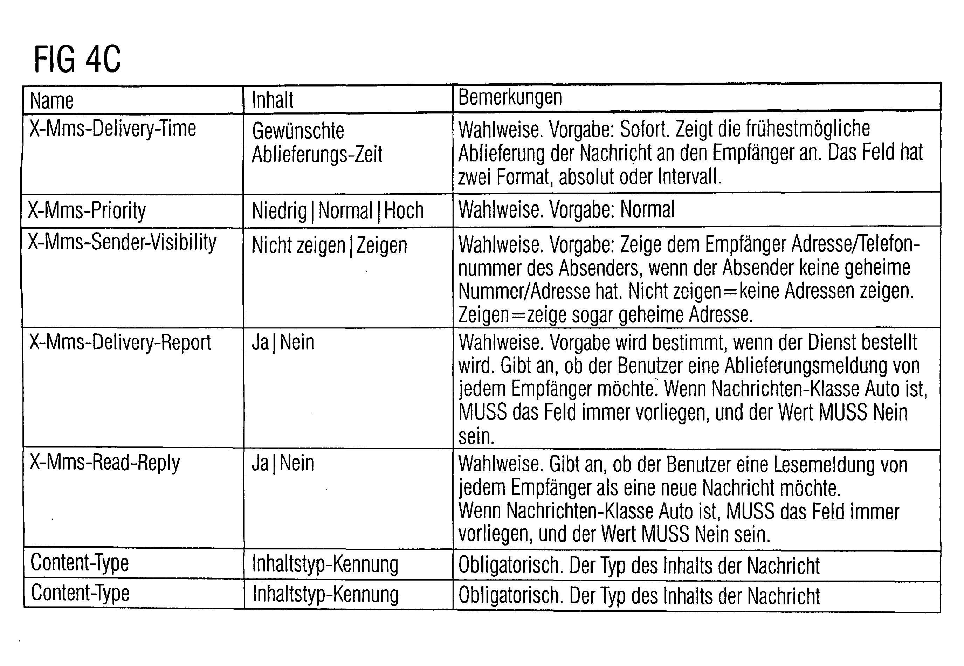

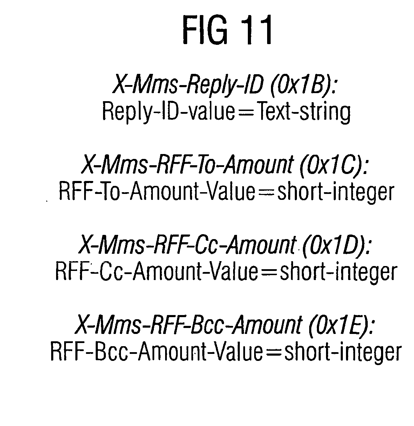

Ohne eine besondere (Dauer-) Vereinbarung mit dem Service-Provider 3 ist in der um Übertragung von Daten 7 nachsuchenden Anfrage 9 (M-send.req) die Information vom Versender 2 mit an den Service-Provider 3 zu übertragen, daß und gegebenenfalls in welchem Umfang eine Übernahme der Kosten einer Beantwortung der zu versendenden Daten vom Versender 2 übernommen wird. Hierzu sind die Header-fields 17, 18, 19, 20 neu in die Anfrage 9 aufgenommen worden (Fig. 4), wodurch die Zahl der Header-Felder gegenüber dem Stand der Technik (Fig. 3) vergrößert wurde. In den Feldern 17, 18, 19, die beispielhaft mit 0x1B, 0x1C und 0x1D (dezimal 28, 29, 30) adressiert sind und die Feldnamen "X-Mms-RFF-To-Amount", "X-Mms-RFF-Cc-Amount" und "X-Mms-RFF-Bcc-Amount" erhalten haben, sind jeweils integer-Variablen abgelegt (Fig. 11). Diese definieren für drei Gruppen von Empfängern, nämlich die "To"-Gruppe, (direkte Empfänger) die "Cc"-Gruppe ("carbon copy": mitlesen unter Kenntnis der weiteren Empfänger) und die "Bcc"-Gruppe ("blind carbon copy": mitlesen ohne Kenntnis des oder der weiteren Empfänger), jeweils die Anzahl derjenigen Antwortnachrichten von Empfängern 4 aus jeder dieser Gruppen, für die der ursprüngliche Versender 2 die Kosten übernimmt. Die Werte können für die verschiedenen Gruppen voneinander abweichen, was zu den oben genannten Vorteilen führt. Auch die Einstellung von nur einer kostenübernommenen Antwort ist möglich. Wenn die Integer-Variable beispielsweise aus einem Oktet besteht, sind maximal 256 freie Antworten möglich. Anstelle der hier gezeigten Gruppeneinteilung ist auch eine andere oder feinere Einteilung möglich.

Zudem kann das an sich schon vorhandene Feld 21 (X-Mms-Expiry) dahingehend ergänzt sein, daß die dort eingegebene maximale Speicherzeit einer Nachricht im Server des Providers 3 nunmehr auch als eine maximale Zeitdauer (Deadline) für die Kostenübernahme definiert wird, das heißt, daß solche Antworten, die nach Ablauf dieser Zeitdauer gesendet werden, nicht mehr vom Versender 2 der ursprünglichen Daten zu bezahlen sind.

Das Feld 20 gibt ein Identifizierungssignal zum Wiedererkennen der Antwort, um damit diese dem richtigen Datensatz 7 zuordnen zu können und nicht alle in der Folgezeit beim ursprünglichen Versender 2 eingehenden Nachrichten in der Rubrik "Reply for free" und damit für ihn kostenpflichtig zu erhalten.

Es versteht sich, daß neben der hier gezeigten Auswahl von Feldern auch weitere Felder möglich sind, etwa solche, die einen Kostenbruchteil eingeben, wenn die Antwortkosten nicht vollständig vom Versender 2 der ursprünglichen Daten getragen werden sollen. Auch kann beispielsweise eingegeben werden, daß die Kosten bis zum Ablauf der in Feld 21 abgelegten Zeitdauer vollständig und danach nur noch anteilig oder bis zu einer Höchstgrenze übernommen werden. Ebenso ist es möglich, den Typ einer Antwort auszuwählen, für den Kosten übernommen werden, beispielsweise nur für Textnachrichten, nicht aber für Bild- oder Audiodaten.

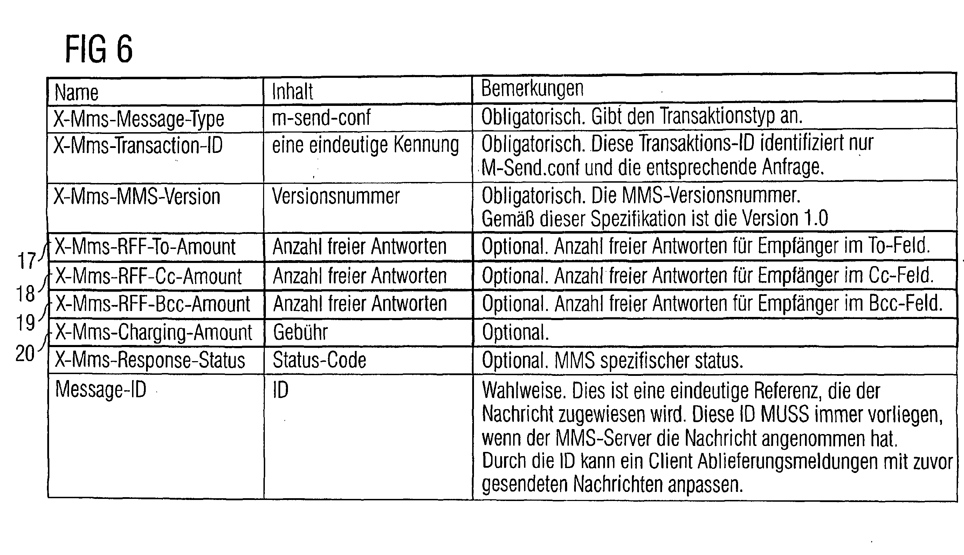

Der Service-Provider 3 kann in seiner Quittierungsnachricht 10 (M-Send.conf: Fig. 5, mit erfindungsgemäßen Erweiterungen: Fig. 6) seine Bereitschaft, die Kostenübernahme durch den Versender 2 ganz oder teilweise akzeptieren und setzt hierfür die auch in dieser Nachricht 10 enthaltenen Felder 17, 18, 19, für die jeweilige Gruppe entweder bei voller Akzeptanz auf die vom Versender 2 vorgeschlagenen Werte oder bei teilweiser Akzeptanz auf kleinere Werte. Zudem kann (nicht eingezeichnet) die Quittierungsnachricht 10 ein Feld 22, beispielsweise mit 0x1A (dezimal: 26) adressiert, enthalten, in dem eine Information über die zu erwartende Kostenhöhe, angefertigt durch den Service-Provider (Ebene 3), abgelegt ist. Diese Information ist abhängig von der Zahl der erlaubten Antworten und der eingestellten Zeitdauer. Auch kann eine Abhängigkeit vom Datentyp, der in der Antwort erlaubt sein soll, vorliegen.

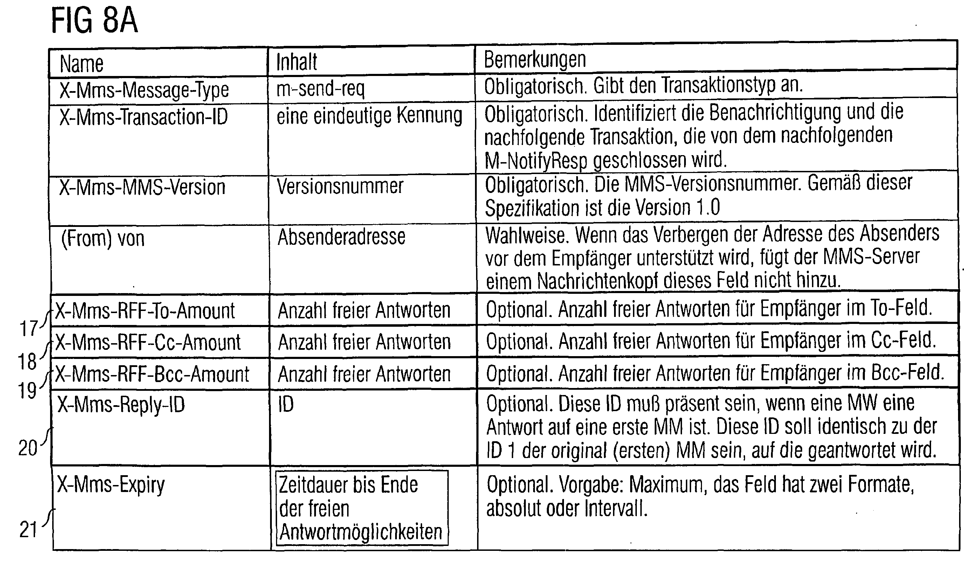

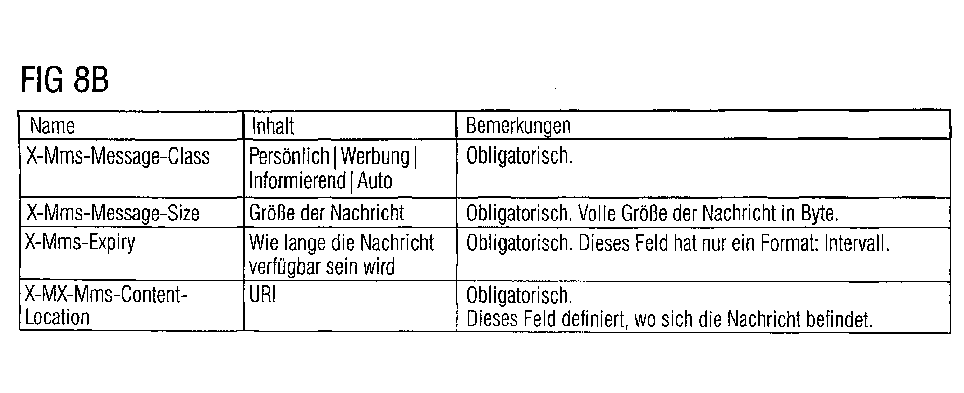

Der Service-Provider 3 beläßt bei Einverständnis mit der gewünschten Kostenübernahme durch den Versender 2 in seiner an den Empfänger 4 gerichteten Sendung 11 (M-notification.ind: Fig. 8) die Felder 17, 18, 19 auf den vom Versender 2 eingestellten Werten und teilt diese dem oder den Empfänger(n) 4 je nach Gruppe, in der der Empfänger 4 zu adressieren ist, mit. Der Empfänger erhält damit die Nachricht, daß für ihn ein Datensatz 7 zum Herunterladen bereitliegt, auf den er in bestimmter Weise oder innerhalb einer bestimmten Zeit eine vorgegebene Anzahl von Antworten kostenfrei an den ursprünglichen Versender 2 zurücksenden darf. Diese Information kann dem Empfänger optisch (über das Anzeigemittel 15, beispielsweise das Display) oder akustisch mitgeteilt werden.

Das Identifizierungssignal in dem Feld 20, das mit 0x1B (dezimal: 27), adressiert ist und den Feldnamen X-Mms-Reply-ID trägt, ist lediglich in einer Antwort enthalten, um ein eindeutiges Identifizierungssignal ID2 zur Zuordnug zu einem ursprünglichen Datensatz zu ermöglichen. Die ursprüngliche Nachricht 7 ist bereits nach Stand der Technik durch ein anderes Header-field mit seiner ID1 eindeutig identifiziert, benötigt daher das Zusatzfeld 20 nicht.

Nach Benachrichtigung mit der Sendung 11, daß ein Datensatz 7 zum Herunterladen bereitsteht, kann der Empfänger 4 entscheiden, ob er den Datensatz 7 von der Ebene 3 des Service-Providers in seine Empfangsebene 4 ,also in den Speicher seines Telekommunikationsgeräts 6, herunterladen will. Falls er sich dafür entscheidet, wird er an den Provider die Nachricht 13 (WSP GET.req) zurücksenden.

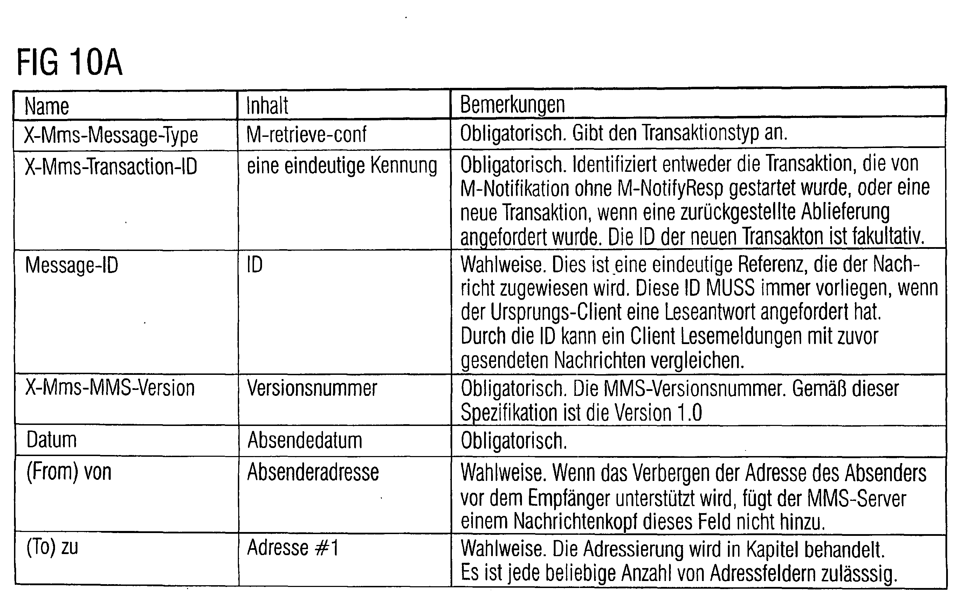

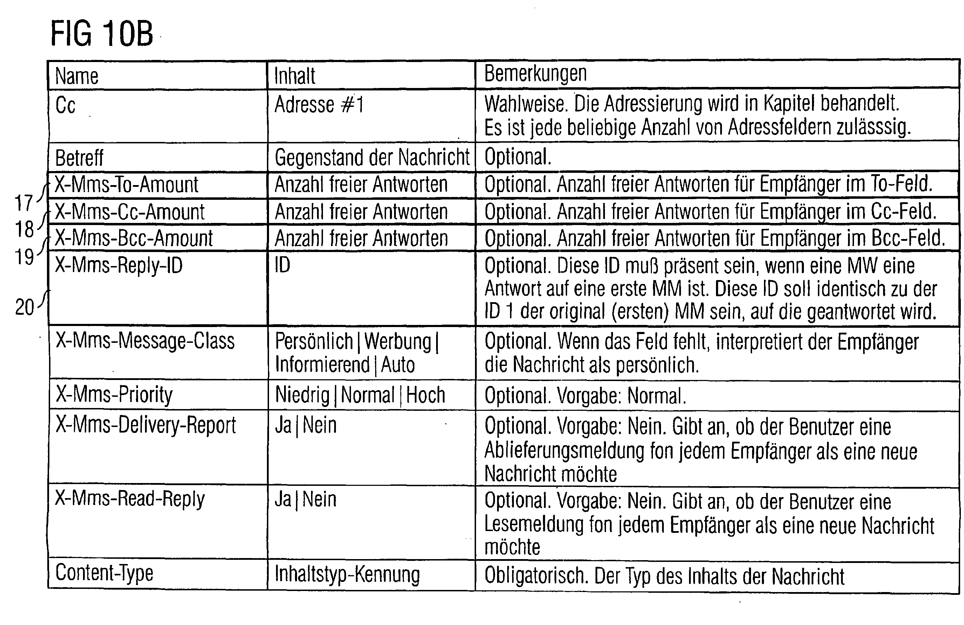

Dadurch wird beim Service-Provider 3 die Datenübertragung 14 (M-Retrieve.conf) an den Empfänger 4 eingeleitet. Anderenfalls wird ein Herunterladen des Datensatzes 7 (Übersendung der Sendung 14 an den Empfänger 4) nicht freigegeben. Auch ist es möglich, daß der Empfänger 4 die Nachricht erst zu einem späteren Zeitpunkt übermittelt bekommen will. Die Sendung 14 kann wie die Nachricht 11 die neu eingefügten Felder 17, 18, 19 enthalten. (Fig. 10). Die Kosteninformation über die Gratisantworten wird somit nicht nur bei Benachrichtigung über eine bereitliegende Sendung, sondern auch bei "Auslieferung" des Datensatzes 7 mitgeliefert und kann somit auch gespeichert oder etwa ausgedruckt werden.

Das Feld 20 zur Zuordnung ist wiederum nur in einer Antwort enthalten, da der Datensatz 7 bereits eindeutig identifiziert (ID1) ist.

Erfindungsgemäß können somit beispielsweise Kunden, die eine Bestellung aufgeben sollen, von Kosten hierfür entlastet werden. Auch können beispielsweise Eltern ihrem Kind eine Nachricht übertragen, ohne daß das Kind für die angeforderte Antwort bezahlen müßte. Dies ist insbesondere dann bedeutend, wenn die Übermittlung direkt bezahlt werden muß, etwa durch Karten, deren Wert verringert wird. Auch bei Karten mit zu geringem Restwert ist dann die Beantwortung von Daten 7 im "Reply for free" Verfahren noch möglich.

In der Antwortnachricht (Fig. 2) ist dann, wie oben bereits angedeutet, zusätzlich das Feld Feld 20, das mit 0x1B (dezimal: 27), adressiert ist und den Feldnamen X-Mms-Reply-ID trägt, enthalten. Die hierin abgelegte Identitätsinformation ID2 kann dann, wenn es sich um eine Antwort handelt, die der Kostenübernahme unterfällt, dem Identifizierungssignal ID1 der übertragenen Daten 7 entsprechen, so daß übertragene Daten 7 und zurückgesandte Antwort das gleiche Identifizierungssignal erhalten, woraus deren korrekte Zuordnung zueinander sichtbar wird. Die Antwort kann in gleicher Weise gekennzeichnet sein, unabhängig davon, ob die Information der Kostenübernahme für eine oder mehrere Antworten in der Nachricht 11 (M-notify.ind) und/oder in der Nachricht 14 (M-retrieve.conf) enthalten war.

Das vorgestellte Verfahren kann in eine Software zum Betreiben des jeweiligen Kommunikationsstandards, etwa UMTS, integriert sein. Die Telekommunikationsgeräte 5,6 sind dann mit einer entsprechenden Software versehen.

Um das Abrechnungsmodell "Reply For Free" umsetzen zu können, muß das MMS Relay 3 daher folgende Verarbeitungsschritte leisten können:
a) Aus den Header-Feldern der WAP Nachricht 9 (M-Send.req), in der die Anzahl der kostenfreien Antwort-MMs für die einzelnen Empfängergruppen codiert ist, müssen für die WAP Messages 11 (M-Notification.ind) und 14 (M-Retrieve.conf) die erforderlichen Feld-Werte für die unterschiedlichen Empfängergruppen ausgelesen werden - und entsprechend der Vorgaben des Service-Providers 3 modifiziert oder bestätigt werden.
b) Falls die Identitätssignale der übersandten Daten 7 (ID 1) und der Antwort (ID 2) voneinander verschieden sind, muß das MMS Relay 3 diese eindeutig aufeinander abbilden können und das Feld 20 (X-MMS-Reply-ID) entsprechend überwachen oder modifizieren.
c) Nach dem Versenden der Antwort mit Hilfe der WAP Message 23 (M-send.req) von Empfänger 4 (MMS User Agent B) an das MMS Relay 3 muß dieses anhand der individuellen Identifikationssignale überprüfen, ob die Antwort-Multimedia-Nachricht (MM_{B}) tatsächlich eine Antwort auf die übertragenen Daten 7 (MM_{A}) ist und ob die gesetzte Zeitdauer eingehalten worden ist.

Im folgenden wird detailliert auf die in den WAP Messages benutzten Header-Felder eingegangen. Dabei wird beispielhaft folgendes Szenario angenommen: MMS User Agent A (Versender 2) verschickt eine MM_{A} 7 mit einem Text und einem JPEG-Bild an drei Empfänger 4 (einen "To"-Empfänger und zwei "Cc"-Empfänger). Bei der Empfängergruppe "To" will der Versender 2 die Kosten für drei, bei der Empfängergruppe "Cc" hingegen nur für zwei Antwort-MMs (Multimedia-Nachrichten) übernehmen. Der MMS Service-Provider 3 erlaubt allerdings nur eine kostenfreie Antwort-MM für die "Cc-Empfänger". Als Frist für die Übernahme der Kosten wird eine Stunde (= 3600 Sekunden) eingestellt:
Nachricht 9: M-Send.req (MMS User Agent A → MMS Relay 3):

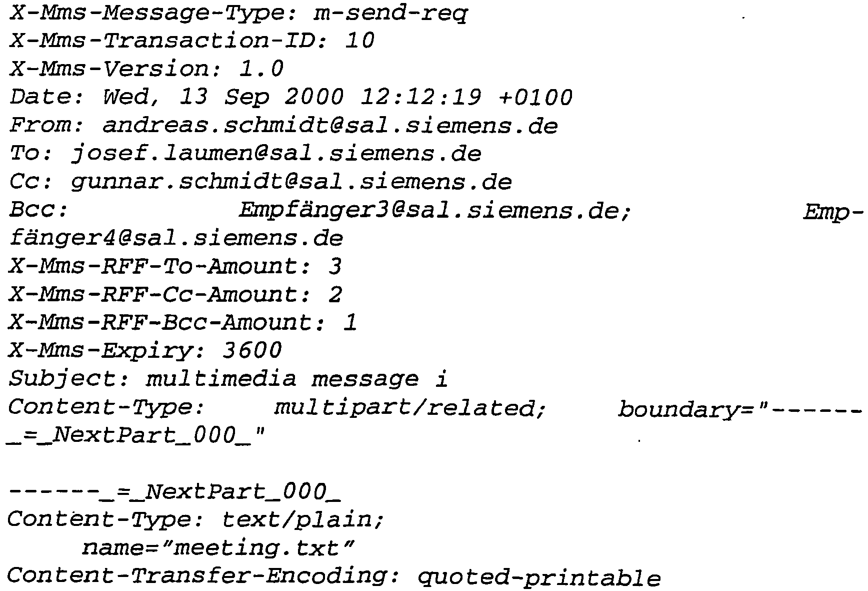

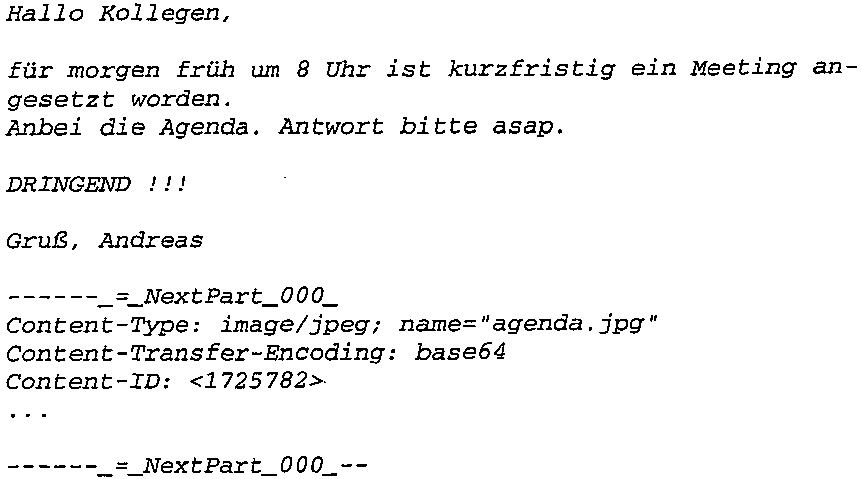

Der Versender 2 (MMS User Agent A) mit der Adresse "andre-as.schmidt@sal.siemens.de" verschickt eine MM_{A} 7, bestehend aus einem Text (MIME content type "plain/text") und einem JPEG-Bild (MIME content type "image/jpeg") an den Empfänger 4 (MMS User Agent B) mit der Adresse "josef.laumen@sal.siemens.de" Ein Durchschlag (carbon copy, "cc") dieser MM_{A} 7 geht an einen weiteren Empfänger 4, den Benutzer mit der Adresse gunnar.schmidt@sal.siemens.de. Zwei weitere blind carbon copies sollen an die unter Bcc aufgeführten MMS-Benutzer als weitere Empfänger 4 übertragen werden. Die WAP Message 9 (M-Send.req) erhält beispielsweise die Transaction-ID 10. Der Absender sei bereit, die Kosten für drei Antwort-MMs vom Benutzer mit der Adresse "josef.laumen@sal.siemens.de" (MMS User Agent B, "To"-Feld) zu übernehmen. Desweiteren möchte er die Kosten für zwei Antwort-MMs vom Benutzer "gunnar.schmidt@sal.siemens.de" ("Cc"-Feld) und jeweils eine Antwort-MM von den anderen beiden "Bcc"-Empfängern übernehmen. Diese Informationen sind in den grau unterlegten Feldern 17 (X-Mms-RFF-To-Amount), 18 (X-Mms-RFF-Cc-Amount) und 19 (X-Mms-RFF-Bcc-Amount) enthalten. Die Zeitdauer für die kostengedeckte Beantwortung der MM_{A} (3600 Sekunden) wurde in das Feld 21 (X-Mms-Expiry) geschrieben.

Der Versender 2 erhält daraufhin die wie folgt modifizierte Nachricht 10 (M-Send.conf) vom MMS Relay 3:
Nachricht 10: M-Send.conf (MMS Relay → MMS User Agent A):
   *X-Mms-Message-Type: m-send-conf*
   *X-Mms-Transaction-ID: 10*
   *X-Mms-Version: 1.0*
   *X-Mms-Response-Status: ok*
   *Message-ID: AAAA.1111@mms-relay.siemens.de*
   *X-Mms-RFF-To-Amount: 3*
   *X-Mms-RFF-Cc-Amount: 1*
   *X-Mms-RFF-Bcc-Amount: 0*
   *X-Mms-charging-Amount: "Dieser Dienst kostet DM 5,00."*

Das MMS Relay 3 bestätigt mit dieser Nachricht 10, daß die WAP Message 9 fehlerfrei zum MMS Relay 3 übertragen worden ist. Es wird die Transaction-ID als Identifizierungssignal benutzt, um die Nachricht 10 beim Versender 2 eindeutig dem dazugehörigen M-Send.req 9 und damit der gesendeten MMA 7 zuzuordnen. Das MMS Relay 3 hat der MM_{A} 7 in diesem Bespiel das Identifizierungssignal "AAA.A.1111@mms-relay.siemens.de" zugeordnet. Es wurde in das Feld 20 geschrieben und entspricht der ID 1 nach Stand der Technik.

In der Nachricht 10 enthalten die Felder 17 (X-Mms-RFF-To-Amount), 18 (X-Mms-RFF-Cc-Amount) und 19 (X-Mms-RFF-Bcc-Amount), wie oben beschrieben, die Informationen, ob der Service-Provider 3 diesen Dienst unterstützt und die Wünsche des Versenders 2 akzeptiert. Dies ist im gezeigten Beispiel nur für die Anzahl der Antwort-MMs des "To"-Empfängers der Fall. Bei dem "Cc-Empfänger" waren zwei Antworten mit Kostenübernahme durch den ursprünglichen Versender 2 gewünscht, der Service-Provider 3 erlaubt allerdings nur eine, etwa weil der Versender 2 nicht als hinreichend solventer Kunde gilt. Bei den beiden "Bcc-Empfängern" war eine Antwort mit Kostenübernahme gewünscht, der Service-Provider 3 erlaubt jedoch keine. Das Feld X-Mms-Charging-Amount zeigt in diesem Beispiel die Kosten an, die dem Absender der MM_{A} 7 für deren Verschicken und die zurückgeschickten Antwort-MMs entstehen können.

### Nachricht 11: M-Notification.ind (MMS Relay 3 → MMS User Agent B 4):

In diesem Beispiel gibt es für jeden der vier Empfänger 4 eine Benachrichtigung: eine an den "To-Empfänger" und jeweils eine an den "Cc-Empfänger" und die beiden "Bcc-Empfänger". Jede enthält eine eigene Transaction-ID. Die Information über die Zeitdauer steht bei allen in dem Feld 21 (X-Mms-Expiry), und die Information über den Speicherplatz der MMA 7 steht bei allen in dem Feld X-Mms-Content-Location.

### a) Nachricht 11: M-Notification.ind an den "To-Empfänger":

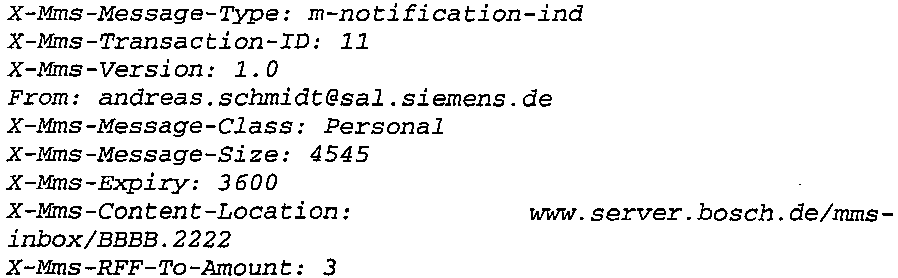

Der "To-Empfänger" 4 erfährt gemäß über den Eintrag im Feld 17 (X-Mms-RFF-To-Amount), daß drei Antwort-MMs für ihn kostenlos sind.

### b) Nachricht 11: M-Notification.ind an den "Cc-Empfänger":

*X-Mms-Message-Type: m-notification-ind*
*X-Mms-Transaction-ID: 12*
*X-Mms-Version: 1.0*
*From: andreas.schmidt@sal.siemens.de*
*X-Mms-Message-Class: Personal*
*X-Mms-Message-Size: 4545*
*X-Mms-Expiry: 3600*
*X-Mms-Content-Location: www.server.bosch.de*/*inbox*/*mms*/*schmidt.gunnar*/*BBBB.2222*
*X-Mms-RFF-Cc-Amount: 1*

Der "Cc-Empfänger" erfährt über den Eintrag im Feld 18 (X-Mms-RFF-Cc-Amount), daß eine Antwort-MM für ihn kostenlos ist.

### c) Nachricht 11: M-Notification.ind an "Bcc-Empfänger 2":

*X-Mms-Message-Type: m-notification-ind*
*X-Mms-Transaction-ID: 13*
*X-Mms-Version: 1.0*
*From: andreas.schmidt@sal.siemens.de*
*X-Mms-Message-Class: Personal*
*X-Mms-Message-Size: 4545*
*X-Mms-Expiry: 3600*
*X-Mms-Content-Location: www.server.bosch.de*/*mmsinbox*/*default-user*/*2234567ABCDEFG*

Die *M-Notification.ind* an die beiden "Bcc"-Empfänger, hier beispielhaft für den zweiten Empfänger 4 aus dieser Gruppe, ändert sich hier nicht gegenüber dem Stand der Technik, da der Service-Provider 3 den Wunsch des Versenders 2 zurückgewiesen hatte, die Kosten für je eine Antwort der "Bcc"-Empfänger zu tragen.

Der Download der MM_{A} 7 wird durch den WSP GET Befehl 13 eingeleitet. Die Daten 7 werden daraufhin vom MMS Relay 3 in der Nachricht 14 M-Retrieve.conf zum jeweiligen Empfänger 4 gesandt.

Im folgenden wird nur noch der "To"-Empfänger betrachtet.

### Nachricht 14: M-Retrieve.conf (MMS Relay 3 → MMS User Agent B 4) :

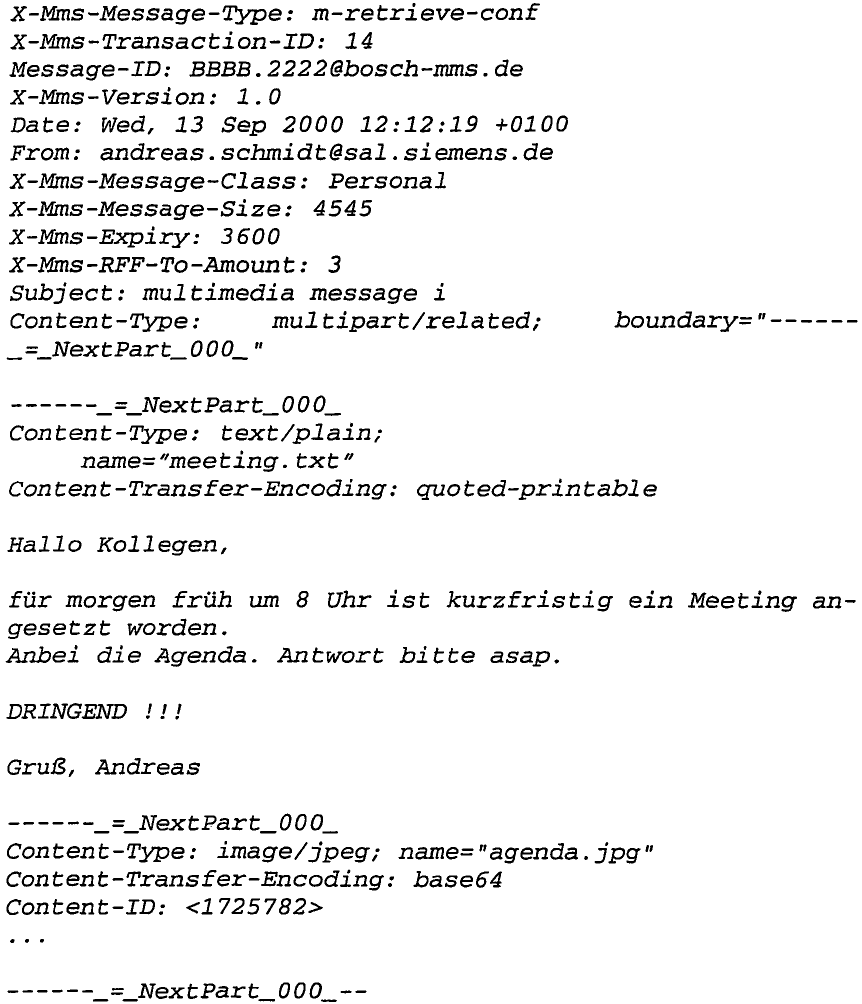

Die MM_{A} 7 kann nun eine andere Message-ID aufweisen, wenn z.B. der Adressat 4 dieser Daten 7 zu einem zweiten Service-Provider "gehört". Dies ist im Beispiel berücksichtigt worden, indem der Wert "BBBB.2222@bosch-mms.de" in das Feld Message-ID geschrieben wurde.

Wie schon in der Nachricht 11 (M-notification.ind) erfährt der "To-Empfänger" über den Eintrag im Feld X-Mms-RFF-To-Amount, daß drei Antwort-MMs für ihn kostenlos sind.

Nach Stand der Technik ist das Vorhandensein des Felds Message-ID optional in der WAP-Nachricht 14. Um die Funktionalität des "Reply for free" zu ermöglichen, muß dieses Feld aber dann vorhanden sein, wenn eines der Felder 17 (X-Mms-RFF-To-Amount), 18 (X-Mms-RFF-Cc-Amount) oder 19 (X-Mms-RFF-Bcc-Amount) vorhanden und belegt ist.

Im folgenden sendet der To-Empfänger 4 der MM_{A} 7 eine Antwort-MM, MM_{B}, zurück an den ursprünglichen Versender 2. Dazu wird eine leicht modifizierte M-Send.req 23 benutzt (Fig. 2). Es soll in diesem Beispiel die erste von drei möglichen/vorbezahlten Antworten (s.o.) gesendet werden.

### Nachricht 23: M-Send.req (MMS User Agent B → MMS Relay):

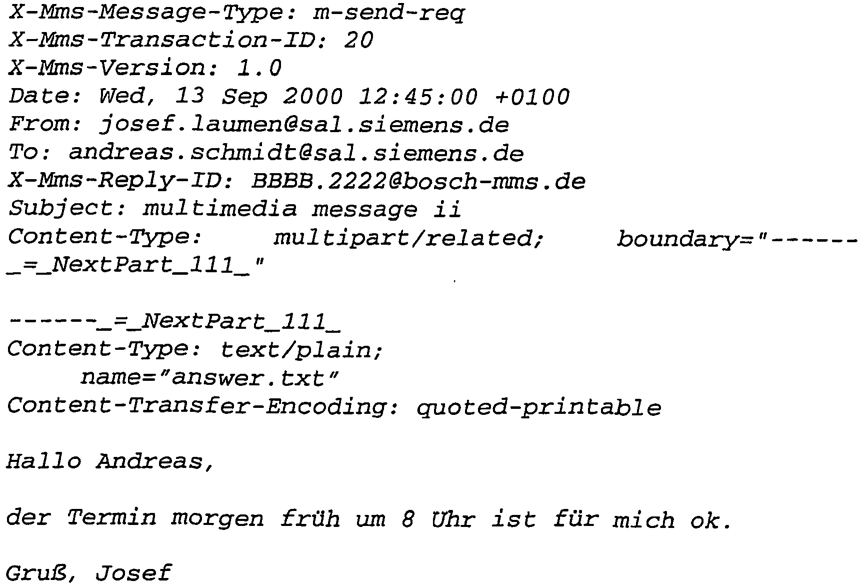

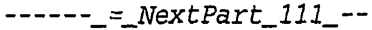

Der ursprüngliche Empfänger 4 (MMS User Agent B) teilt über das Vorhandensein des neuen Feldes 20 (X-Mms-Reply-ID) mit, daß diese MM_{B} eine Antwort auf eine andere MM darstellt. Auf welche MM sich diese Antwort bezieht, wird im Feldeintrag "BBBB.2222@bosch-mms.de" des Felds 20 (X-Mms-Reply-ID) festgelegt. Dieser Eintrag ist die Message-ID der MM_{A}, die MMS User Agent B beim Download der MM_{A} 7 mit der Nachricht 14 erfahren hat.

Die Sendeanfrage 23 (M-Send.req) des MMS User Agent B wird mit einer Nachricht 24 (M-Send.conf) vom MMS Relay 3 quittiert. Diese ist modifiziert:
Nachricht 24: M-Send.conf (MMS Relay → MMS User Agent B) :
   *X-Mms-Message-Type: m-send-conf*
   *X-Mms-Transaction-ID: 20*
   *X-Mms-Version: 1.0*
   *X-Mms-Response-Status: ok*
   *Message-ID: CCCC.3333@bosch-mms.de*
   *X-Mms-RFF-To-Amount: 2*

Mit dem Eintrag "X-Mms-RFF-To-Amount: 2" kann das MMS Relay 3 dem MMS User Agent B mitteilen, daß er noch zwei weitere kostengedeckte Antworten für dieselbe MM_{A} 7 senden kann.

Das MMS Relay 3 informiert nun den Empfänger der MM_{B}, also den ursprünglichen Versender 2 der MM_{A} 7, mit der WAP Message 25 (M-Notification.ind):

### Nachricht 25: M-Notification.ind (MMS Relay 3 → MMS User Agent A 2):

*X-Mms-Message-Type: m-notification-ind*
*X-Mms-Transaction-ID: 21*
*X-Mms-Version: 1.0*
*From: josef.laumen@sal.siemens.de*
*X-Mms-Message-Class: Personal*
*X-Mms-Message-Size: 4800*
*X-Mms-Content-Location: www.server.siemens.de*/ *inbox*/*mmslxyz987654321*
*X-Mms-Reply-ID: AAAA.1111@mms-relay.siemens.de*

Auch diese M-Notification.ind 25 ist modifiziert, um dem MMS User Agent A mitzuteilen, daß die vorliegende MM eine Antwort-MM darstellt und auf welche MM_{A} 7 sich diese Antwort bezieht.

Dazu wird in dieser Antwort das Feld 20 *(X-Mms-Reply-ID)* in die *M-notification.ind* 25 eingefügt. Der Feld-Eintrag sollte die Message-ID 1 der MM_{A} 7 sein, auf die sich diese Antwort-MM_{B} bezieht, hier: "AAAA.1111@mms-relay.siemens.de". Wichtig ist hierbei wiederum, daß der Service-Provider 3 (das MMS Relay) dafür zuständig ist, ID 2 auf ID 1 abzubilden, falls diese beiden voneinander verschieden sind, denn MMS User Agent A kennt lediglich ID 1, während MMS User Agent B lediglich ID 2 kennt. Der Inhalt der Felder 20 (X-MMS-Reply-ID) kann in den Sendungen 23 (M-Send.req) und 25 (M-notification.ind) unterschiedlich sein - und ist es in diesem Beispiel auch -, obwohl beide Male die gleiche MM_{B} identifiziert wird.)

Der korrekte Empfang dieser Benachrichtigung kann anschließend wieder mit der WAP-Nachricht M-NotifyResp.req bestätigt werden, indem die entsprechende Transaction-ID der M-notification.ind zusammen mit einer Statusmeldung zurück zum MMS Relay 3 geschickt wird.

Wiederum wird der Download der MM_{B} von MMS User Agent A durch den WSP GET Befehl 26 eingeleitet. Die MM_{B} wird darauf vom MMS Relay 3 in der M-Retrieve.conf Message 27 zum MMS User Agent A gesendet:
Nachricht 27: M-Retrieve.conf (MMS Relay → MMS User Agent A) :

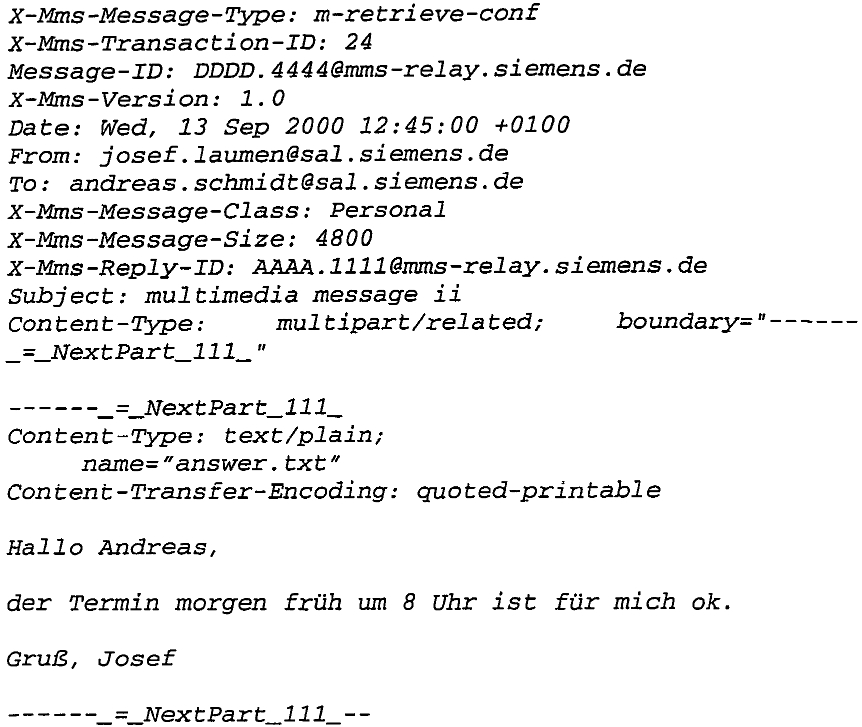

Auch die M-retrieve.conf 27 ist modifiziert, um dem MMS User Agent A mitzuteilen, daß die vorliegende MM_{B} eine Antwort-MM darstellt und auf welche MM sich diese Antwort bezieht. Dazu ist das Feld 20 (X-Mms-Reply-ID) in die M-notification.ind eingefügt. Der Feld-Eintrag sollte die Message-ID 1 der MM_{A} sein, auf die sich diese Antwort-MM_{B} bezieht.

Eine Weiterbildung betrifft ein Verfahren zur Abrechnung von Datenübertragungskosten in einem Mobilfunknetz, wobei Daten mindestens ein Identifikationssignal für die Übertragungskosten zugeordnet, und dieses Identifikationssignal an den Empfänger und/oder den Versender der Daten übertragen wird. Dabei wird für die Übermittlung der vom Absender festgesetzten Frist auf ein Daten-Identifikationssignal wie z.B. eine WAP-Message (Wireless Application Protocol), die dem Absender und/oder dem jeweiligen Empfänger der Nachricht vorgegeben worden ist, kein neues Header-Feld in diesem Datenidentifikationssignal zur Verfügung gestellt. Stattdessen ist es gemäß der Hauptanmeldung vorteilhaft, für die Übermittlung einer solchen Frist, innerhalb derer z.B. der Empfänger kostenlos auf eine an ihn adressierte Multimedia Message antworten kann, die Verwendung des bereits existierenden Header-Feldes X-MMS-Expiry zu verwenden. Dieses Header-Feld ist bereits in WAP-209-MMS Encapsulation, Release 2000,Wireless Application Protocol;WAP Multimedia Messaging Service; Message Encapsulation; MMS Proposed SCD 1.0 angegeben. Diese vom Absender festsetzbare Frist zur Beantwortung bzw. Reaktion ist gemäß der Hauptanmeldung insbesonderere bei den WAP-Messages M-Send.req, M-Notification.ind und M-Retrieve.conf eingeführt. Die in dem jeweiligen, bereits implementierten Header-Feld codierte Gültigkeitsdauer einer multimedia message wird demnach gleichzeitig auch als Frist gedeutet, innerhalb derer der Empfänger einer multimedia message kostenlos auf diese antworten kann. Diese Verwendung bereits existierender Header-Felder, die dem jeweiligen Daten-Identifikationssignal zugeordnet sind, ist besonders effizient und zweckmäßig. Allerdings kann es zu Problemen bei der Übermittlung der durch den Absender vorgegebenen Frist dann kommen, wenn die bereits existierenden Header-Felder durch andere Datensätze vorbelegt sind.

Dieses Problem wird in vorteilhafter Weise dadurch gelöst, dass dem jeweiligen Identifikationssignal mindestens ein Header-Feld zusätzlich hinzugefügt wird, in dem eine Frist zur Reaktion auf das Identifikationssignal gesetzt wird.

Dadurch ist eine einfache Übermittlung der jeweilig gesetzten Reaktionsfrist auf ein übermitteltes Daten-Identifikationssignal in zuverlässiger Weise unter einer Vielzahl praktischer Gegebenheiten weitgehend sichergestellt.

Alternativ wird also mindestens ein neues Header-Feld für die Übermittlung der vom Absender festgesetzten Frist im jeweiligen Daten-Identifikationssignal eingeführt. Insbesondere werden die WAP Messages M-send.req, M-Notification.ind und M-Retrieve.conf jeweils um mindestens ein weiteres Header-Feld ergänzt. Diese können beispielsweise den Namen X-Mms-Replydaedline tragen. Ihnen wird zweckmäßigerweise die hektardezimale Kodierung 0x1F (dezimal:127) zugeordnet. Die Feld-Werte dieses Header-Feldes werden vorzugsweise gemäß WAP-209-MMSEncapsulation, Release 2000;Wireless Application Protocol; WAP Multimedia Messaging Service; Message Encapsulation;MMS Proposed SCD 1.0 und WAP-203-WSP, Version 4-May-2000;Wireless Application Protocol, Wireless Session Protocol Specification;Chapter 8.4:"Header Encoding" codiert. Auf diese Weise lässt sich für die Frist ein explizites Datum oder eine bestimmte Dauer angeben. Vorzugsweise weist ein solches zusätzliches Header-Feld folgende Aufteilung auf:
X-Mms-Reply-Deadline(0x1F):
   Reply Deadline Value = Value length (Absolute-token Datevalue /Relative-token Delta-seconds-value)
   absolute-token=<octet 128>
   relative-token=<octet 129>

Weiterhin soll der Absender einer Antwort-Multimedia Message seine Antwort auf eine zuvor erhaltene Mulimedia Message auch unabhängig vom gewählten Abrechnungsmodell (z.B. Replay charging) als Antwort kennzeichnen können. Dazu ist ebenfalls die Einführung mindestens eines weiteren Header-Feldes analog zu dem Header-Feld "X-MMS-Reply-ID" zweckmäßig, in das die Message-ID der Original-Mulimedia Message, auf die geantwortet wird, geschrieben werden kann.

## Patentansprüche

1. Verfahren zur Abrechnung von Datenübertragungskosten für die Übertragung von Multimedia-Nachrichten in einem Mobilfunknetz,
wobei übertragenen oder zu übertragenden Daten einer Multimedia-Nachricht zumindest ein Kostensignal für die Kosten einer Sendung zumindest einer auf die übertragenen Daten der Multimedia-Nachricht bezogenen Antwort zugeordnet und das Kostensignal oder die Kostensignale an den oder die Empfänger der Daten übertragen werden,
wobei das Kostensignal oder die Kostensignale Informationen über eine Kostenübernahme für die zumindest eine Antwort durch den ursprünglichen Sender der Daten enthalten,
wobei das Kostensignal eine Identifizierungsinformation für die Daten zur Ermöglichung einer Zuordnung der zumindest einen Antwort zu diesen Daten umfasst, und
wobei das Kostensignal oder die Kostensignale in einem oder mehreren Header-Feldern der übertragenen Daten der Multimedia-Nachricht enthalten sind.

2. Verfahren zur Abrechnung von Datenübertragungskosten für die Übertragung von Multimedia-Nachrichten in einem Mobilfunknetz,
wobei übertragenen oder zu übertragenden Daten einer Multimedia-Nachricht zumindest ein Kostensignal für die Kosten einer Sendung zumindest einer auf die übertragenen Daten der Multimedia-Nachricht bezogenen Antwort zugeordnet und das Kostensignal oder die Kostensignale an den oder die Empfänger der Daten übertragen werden,
wobei das Kostensignal oder die Kostensignale Informationen über eine Kostenübernahme für die zumindest eine Antwort durch den ursprünglichen Sender der Daten enthalten,
wobei das Kostensignal eine Zeitdauer bestimmt, innerhalb derer die zumindest eine Antwort auf die übertragenen Daten vom ursprünglichen Empfänger kostenfrei gegeben werden kann, und wobei das Kostensignal oder die Kostensignale in einem oder mehreren Header-Feldern der übertragenen Daten der Multimedia-Nachricht enthalten sind.

3. Verfahren nach Anspruch 1,
**dadurch gekennzeichnet,**
**dass** das Kostensignal eine Zeitdauer bestimmt, innerhalb derer eine Antwort auf die übertragenen Daten vom ursprünglichen Empfänger kostenfrei gegeben werden kann.

4. Verfahren nach einem der Ansprüche 1 bis 3,
**dadurch gekennzeichnet,**
**dass** das Kostensignal eine Anzahl von Antworten bestimmt, die auf die übertragenen Daten vom ursprünglichen Empfänger kostenfrei gegeben werden können.

5. Verfahren nach einem der vorhergehenden Ansprüche,
**dadurch gekennzeichnet,**
**dass** vom Datenversender bei an mehrere Empfänger übertragenen Daten den jeweiligen Datensendungen unterschiedliche Kostensignale zugeordnet werden.

6. Verfahren nach Anspruch 5,
**dadurch gekennzeichnet,**
**dass** sich die Unterschiedlichkeit des Kostensignals oder der Kostensignale auf die Bereitschaft einer Kostenübernahme für eine Antwort und/oder auf die Zeitdauer dieser Bereitschaft und/oder auf die Anzahl der kostenfrei ermöglichten Antworten bezieht.

7. Verfahren nach einem der Ansprüche 1 bis 6,
**dadurch gekennzeichnet,**
**dass** dem Empfänger die Information des Kostensignals optisch oder akustisch vor, bei oder nach Empfang der Daten angezeigt wird.

8. Verfahren nach einem der Ansprüche 1 bis 7,
**dadurch gekennzeichnet,**
**dass** das Verfahren im Mobile Messaging Service (MMS) angewandt wird.

9. Verfahren nach einem der Ansprüche 1 bis 8,
**dadurch gekennzeichnet,**
**dass** das verfahren im Übertragungsstandard UMTS (Universal Mobile Telecommunication System), im GSM (Global system for mobile communication), im GPRS (General packet radio service) und/oder im EDGE(Enhanced Data Rates for GSM environments angewandt wird.

10. Verfahren nach einem der Ansprüche 1 bis 9,
**dadurch gekennzeichnet,**
**dass** die Bereitschaft zur Übernahme der Kosten für eine oder mehrere Antworten in einem Header-Feld und die Zeitdauer zur Bereitschaft der Kostenübernahme in einem weiteren Header-Feld abgelegt wird.

11. Verfahren nach Anspruch 10,
**dadurch gekennzeichnet,**
**dass** das Kostensignal oder die Kostensignale in den Header-Feldern 0x1B bis 0x1E abgelegt werden.

12. Verfahren nach einem der Ansprüche 1 bis 11,
**dadurch gekennzeichnet,**
**dass** Kostensignal jeweils bei Übermittlung eines Datensatzes (Multimedia message) vom Versender (MMS user agent A) zum MMS Relay des Service-Providers, in der Bestätigung des Empfangs eines übermittelten Datensatzes (Multimedia message) durch das MMS Relay des Service-Providers an den Versender (MMS user agent A), in der Benachrichtigung an den Empfänger (MMS user agent B) durch das MMS Relay des Service-Providers über das Vorhandensein eines neuen Datensatzes (Multimedia message) sowie bei der Übermittlung einer Antwort (Multimedia message) vom Empfänger (MMS user agent B) der ursprünglichen Daten an das MMS Relay des Service-Providers und bei Benachrichtigung des ursprünglichen Senders (MMS user agent A) über das Vorhandensein einer Antwort (Multimedia message) vom ursprünglichen Empfänger (MMS user agent B) übertragen wird.

13. Verfahren nach einem der Ansprüche 1 bis 12,
**dadurch gekennzeichnet,**
**dass** zusätzliche Header-Felder jeweils den Sendungen M-send.req, M-send.conf, M-Notification.ind und M-Retrieve.conf zugeordnet werden.

14. Verfahren nach Anspruch 13,
**dadurch gekennzeichnet,**
**dass** der ausgesandten Sendung M-Send.req ein zusätzliches Header-field für die vom Sender vorzunehmende Möglichkeit der Kostenübernahme für eine oder mehrere Antworten auf seine zu sendenden Daten und ein zusätzliches Header-Feld zur Bestimmung der Zeitdauer der Kostenübernahmebereitschaft zugeordnet wird.

15. Verfahren nach Anspruch 14,
**dadurch gekennzeichnet,**
**dass** in der von einem Provider an den Datenversender zurückgegebenen Sendung M-send.conf ein Header-Feld mit einer die Kostenübernahme für die Antwort annehmenden oder (teilweise) ablehnenden Bestätigung und ein Header-Feld mit einer Information über die dem Datenversender voraussichtlich in Rechnung zu stellenden Kosten belegt wird.

16. verfahren nach einem der Ansprüche 12 bis 15,
**dadurch gekennzeichnet,**
**dass** in der von dem Provider an den Empfänger gesandten Sendung M-Notification.ind zumindest ein Header-Feld mit einem die Kostenübernahme anzeigenden und gegebenenfalls eine Begrenzung der Zeitdauer und/oder der Zahl der Antworten angebenden Signal belegt wird.

17. Verfahren nach einem der Ansprüche 12 bis 16,
**dadurch gekennzeichnet,**
**dass** die von dem Empfänger an den Provider gesandte Antwort eine Kennzeichnung, dass es sich um eine Antwort auf zugesandte Daten handelt, und eine Identifizierungsinformation, um welche Daten es sich handelt, enthält.

18. Verfahren nach einem der Ansprüche 12 bis 17,
**dadurch gekennzeichnet,**
**dass** der Benachrichtigung an den ursprünglichen Sender (MMS user agent A) eine Information darüber, dass es sich bei der zum Empfang bereitstehenden Sendung um eine Antwort handelt, und eine Identifizierungsinformation, um welche Daten es sich handelt, enthält.

19. Verfahren nach einem der vorhergehenden Ansprüche,
**dadurch gekennzeichnet,**
**dass** dem jeweiligen Identifikationssignal mindestens ein Header-Feld zusätzlich hinzugefügt wird, in dem eine Frist zur Reaktion auf das Identifikationssignal gesetzt wird.

20. Mobiltelekommunikationsgerät (5;6) zur Abrechnung von Datenübertragungskosten für die Übertragung von Multimedia-Nachrichten in einem Mobilfunknetz aufweisend:
(a) Mittel zum Zuordnen zumindest eines Kostensignals zu übertragenen oder zu übertragenden Daten einer Multimedia-Nachricht für die Kosten einer Sendung zuminderst einer auf die übertragenen Daten der Multimedia-Nachricht bezogenen Antwort, wobei das Kostensignal Informationen über eine Kostenübernahme für die zumindest eine Antwort durch den ursprünglichen Sender der Daten enthält,
(b) Mittel zum Zuweisen einer Identifizierungsinformation für das Kostensignal, mit der den Daten der Multimedia-Nachricht die zuminderst eine Antwort zuordbar ist,
(c) Mittel zum Einbringen des Kostensignals oder die Kostensignale in ein oder mehrere Header-Felder der übertragenen Daten der Multimedia-Nachricht und
(d) Mittel zum Übertragen des Kostensignals oder die Kostensignale an den oder die Empfänger der Daten.

21. Mobiltelekommunikationsgerät (5;6) zur Abrechnung von Datenübertragungskosten für die Übertragung von Multimedia-Nachrichten in einem Mobilfunknetz aufweisend:
(a) Mittel zum Zuordnen zumindest eines Kostensignals zu übertragenen oder zu übertragenden Daten einer Multimedia-Nachricht für die Kosten einer Sendung zuminderst einer auf die übertragenen Daten der Multimedia-Nachricht bezogenen Antwort, wobei das Kostensignal Informationen über eine Kostenübernahme für die zumindest eine Antwort durch den ursprünglichen Sender der Daten enthält,
(b) Mittel zum Zuweisen einer Zeitdauer für das Kostensignal, innerhalb derer die zumindest eine Antwort auf die übertragenen Daten vom ursprünglichen Empfänger kostenfrei gegeben werden kann,
(c) Mittel zum Einbringen des Kostensignals oder die Kostensignale in ein oder mehrere Header-Felder der übertragenen Daten der Multimedia-Nachricht und
(d) Mittel zum Übertragen des Kostensignals oder die Kostensignale an den oder die Empfänger der Daten.

22. Mobiltelekommunikationsgerät (5; 6) nach Anspruch 20 oder 21,
**dadurch gekennzeichnet,**
**dass** dem Mobiltelekommunikationsgerät (5;6) ein Übernahmeschalter (16) zur Einräumung einer Kostenübernahme für eine oder mehrere Antworten zugeordnet ist.

23. Mobiltelekommunikationsgerät nach Anspruch 22,
**dadurch gekennzeichnet,**
**dass** dem Mobiltelekommunikationsgerät (5;6) ein Anzeigemittel (15) zur optischen oder akustischen Anzeige der Kostenübernahme für eine oder mehrere Antworten sowie für die Dauer dieser Kostenübernahme zugeordnet ist.

24. Mobiltelekommunikationsgerät nach einem der Ansprüche 22 oder 23,
**dadurch gekennzeichnet,**
**dass** der Übernahmeschalter (16) softwareseitig implementiert und über ein Eingabemittel anwählbar ist.

25. Mobiltelekommunikationsgerät (5;6) nach einem der Ansprüche 20 bis 24,
**dadurch gekennzeichnet,**
**dass** diesem eine Software zur Belegung von Header-Feldern (17;18;19;20;21) von Datensendungen (9;13) mit einem Kostensignal für eine Übernahme der Kosten einer oder mehrerer Antworten zugeordnet ist.

## Claims

1. Method for the accounting of data transmission costs for the transmission of multimedia messages in a mobile radio network,
whereby data of a multimedia message which is or will be transmitted is assigned at least one cost signal for the costs of sending at least one reply relating to the data of the multimedia message which is transmitted, and that the cost signal(s) is or are transmitted to the recipient(s) of the data,
whereby the cost signal(s) contain(s) information about an assumption of costs, by the original sender of the data, for the at least one reply,
whereby the cost signal includes an identification information for the data in order to allow the assignment of the at least one reply to this data, and
whereby the cost signal(s) is or are contained in one or more header field(s) of the transmitted data of the multimedia message.

2. Method for the accounting of data transmission costs for the transmission of multimedia messages in a mobile radio network, whereby data of a multimedia message which is or will be transmitted is assigned at least one cost signal for the costs of sending at least one reply relating to the data of the multimedia message which is transmitted, and that the cost signal(s) is or are transmitted to the recipient(s) of the data,
whereby the cost signal(s) contain(s) information about an assumption of costs, by the original sender of the data, for the at least one reply,
whereby the cost signal specifies a time duration within which the at least one reply to the transmitted data can be submitted free of charge by the original recipient and
whereby the cost signal(s) is or are contained in one or more header field(s) of the transmitted data of the multimedia message.

3. Method according to claim 1,
**characterised in that**
the cost signal specifies a time duration within which a reply to the transmitted data can be submitted free of charge by the original recipient.

4. Method according to one of claims 1 to 3,
**characterised in that**
the cost signal specifies a number of replies which can be given to the transmitted data free of charge by the original recipient.

5. Method according to one of the preceding claims,
**characterised in that**
different cost signals are assigned to the relevant data messages by the data sender if data is transmitted to a plurality of recipients.

6. Method according to claim 5,
**characterised in that**
the difference between the cost signal(s) relates to the readiness to assume the costs of a reply and/or the time duration of this readiness and/or the number of permitted cost-free replies.

7. Method according to one of the claims 1 to 6,
**characterised in that**
the information in the cost signal is indicated to the recipient visually or acoustically during or after receipt of the data.

8. Method according to one of the claims 1 to 7,
**characterised in that**
the method is applied in the Mobile Messaging Service (MMS).

9. Method according to one of the claims 1 to 8,
**characterised in that**
the method is applied in the transmission standard UMTS (Universal Mobile Telecommunication System), in GSM (Global System for Mobile Communication), in GPRS (General Packet Radio Service) and/or in EDGE (Enhanced Data Rates for GSM Environments).

10. Method according to one of the claims 1 to 9,
**characterised in that**
the readiness to assume the costs of one or more replies is stored in a header field and the time duration of the readiness to assume the costs is stored in a further header field.

11. Method according to claim 10,
**characterised in that**
the cost signal(s) is or are stored in the header fields 0x1B to 0x1E.

12. Method according to one of the claims 1 with 11,
**characterised in that**
the cost signal is transmitted respectively during the transmission of a data record (multimedia message) from the sender (MMS user agent A) to the MMS relay of the service provider, in the confirmation of receipt of a transmitted data record (multimedia message) by the MMS relay of the service provider to the sender (MMS user agent A), in the notification to the recipient (MMS user agent B) by the MMS relay of the service provider concerning the presence of a new data record (multimedia message), as well as during the transmission of a reply (multimedia message) from the recipient (MMS user agent B) of the original data to the MMS relay of the service provider, and when notifying the original sender (MMS user agent A) of the presence of a reply (multimedia message) from the original recipient (MMS user agent B).

13. Method according to one of the claims 1 with 12,
**characterised in that**
additional header field(s) are assigned to the messages M-send.req, M-send.conf, M-Notification.ind and M-Retrieve.conf in each case.

14. Method according to claim 13,
**characterised in that**
the outgoing message M-Send.req is assigned an additional header field for the option on the part of the sender of assuming the costs of one or more replies to the data to be sent by the sender, and an additional header field for determining the time duration of the readiness to assume the costs.

15. Method according to claim 14,
**characterised in that**
the message M-send.conf returned to the data sender by a provider includes a header field containing confirmation of acceptance or (partial) rejection of the assumption of costs of the reply, and a header field containing information about the costs which the data sender can expect to incur.

16. Method according to one of the claims 12 to 15,
**characterised in that**
the message M-Notification.ind sent to the recipient by the provider includes at least one header field containing a signal which indicates the assumption of costs and if appropriate which specifies a limit to the time duration and/or the number of replies.

17. Method according to one of the claims 12 to 16,
**characterised in that**
the answer sent to the provider by the recipient contains an indicator that it is a reply to data which has been sent, and an identification information indicating the data concerned.

18. Method according to one of the claims 12 to 17,
**characterised in that**
the notification to the original sender (MMS user agent A) contains information indicating that the message available for receipt is a reply, and identification information indicating the data concerned.

19. Method according to one of the preceding claims,
**characterised in that**
at least one additional header field is assigned to the identification signal in each case, in which field a time limit for responding is set on the identification signal.

20. Mobile telecommunication device (5;6) for the accounting of data transmission costs for the transmission of multimedia messages in a mobile radio network, comprising:
(a) means for assigning at least one cost signal to data of a multimedia message which is transmitted or will be transmitted for the costs of sending at least one reply relating to the data of the multimedia message which is transmitted, whereby the cost signal contains information about an assumption of costs, by the original sender of the data, for the at least one reply,
(b) means for assigning identification information for the cost signal, with which at least one reply can be assigned to the data of the multimedia message,
(c) means for introducing the cost signal or the cost signals in one or more header fields of the transmitted data of the multimedia message and
(d) means for transmitting the cost signal or the cost signals to the recipient(s) of the data.

21. Mobile telecommunication device (5;6) for the accounting of data transmission costs for the transmission of multimedia messages in a mobile radio network, comprising:
a) means for assigning at least one cost signal to data of a multimedia message which is transmitted or will be transmitted for the costs of sending at least one reply relating to the data of the multimedia message which is transmitted, whereby the cost signal contains information about an assumption of costs, by the original sender of the data, for the at least one reply,
(b) means for assigning a time duration for the cost signal, within which the at least one reply to the transmitted data can be submitted free of charge by the original recipient and,
(c) means for introducing the cost signal or the cost signals in one or more header fields of the transmitted data of the multimedia message and
(d) means for transmitting the cost signal or the cost signals to the recipient(s) of the data.

22. Mobile telecommunication device (5; 6) according to claim 20 or 21,
**characterised in that**
an assumption switch (16) is assigned to the mobile telecommunications device (5;6) for allowing an assumption of costs of one or more replies.

23. Mobile telecommunication device according to claim 22,
**characterised in that**
a display means (15) is assigned to the mobile telecommunications device (5; 6) for visual or acoustic display of the assumption of costs of one or more replies and of the duration of this assumption of costs.

24. Mobile telecommunication device according to one of claims 22 or 23,
**characterised in that**
the assumption switch (16) is implemented using software and can be selected by way of an input means.

25. Mobile telecommunication device (5;6) according to one of claims 20 to 24,
**characterised in that**
this is assigned a software for entering a cost signal, for an assumption of the costs of one or more replies, into header fields (17;18;19;20;21) of data messages (9;13).

## Revendications

1. Procédé de facturation de coûts de transmission de données pour la transmission de messages multimédias dans un réseau de téléphonie mobile,
- au moins un signal de coûts pour les coûts d'un envoi d'au moins une réponse relative aux données du message multimédia transmises étant associé à des données d'un message multimédia transmises ou à transmettre et le signal de coûts ou les signaux de coûts étant transmis au destinataire ou aux destinataires des données ;
- le signal de coûts ou les signaux de coûts contenant des informations relatives à une prise en charge des coûts pour l'au moins une réponse par l'émetteur d'origine des données ;
- le signal de coûts comprenant une information d'identification pour les données pour permettre une association de l'au moins une réponse à ces données ; et
- le signal de coûts ou les signaux de coûts étant contenus dans un ou plusieurs champs d'en-tête des données du message multimédia transmises.

2. Procédé de facturation de coûts de transmission de données pour la transmission de messages multimédias dans un réseau de téléphonie mobile,
- au moins un signal de coûts pour les coûts d'un envoi d'au moins une réponse relative aux données du message multimédia transmises étant associé à des données d'un message multimédia transmises ou à transmettre et le signal de coûts ou les signaux de coûts étant transmis au destinataire ou aux destinataires des données ;
- le signal de coûts ou les signaux de coûts contenant des informations relatives à une prise en charge des coûts pour l'au moins une réponse par l'émetteur d'origine des données ;
- le signal de coûts déterminant une durée de temps dans les limites de laquelle le destinataire d'origine peut donner gratuitement l'au moins une réponse aux données transmises ; et
- le signal de coûts ou les signaux de coûts étant contenus dans un ou plusieurs champs d'en-tête des données du message multimédia transmises.

3. Procédé selon la revendication 1, **caractérisé en ce que** le signal de coûts détermine une durée de temps dans les limites de laquelle le destinataire d'origine peut donner gratuitement une réponse aux données transmises.

4. Procédé selon l'une des revendications 1 à 3, **caractérisé en ce que** le signal de coûts détermine un nombre de réponses que le destinataire d'origine peut donner gratuitement aux données transmises.

5. Procédé selon l'une des revendications précédentes, **caractérisé en ce que**, dans le cas de données transmises à plusieurs destinataires, l'expéditeur de données associe différents signaux de coûts aux envois de données respectifs.

6. Procédé selon la revendication 5, **caractérisé en ce que** la diversité du signal de coûts ou des signaux de coûts se réfère à la disposition à prendre en charge les coûts pour une réponse et/ou à la durée de temps de cette disposition et/ou au nombre de réponses rendues possibles gratuitement.

7. Procédé selon l'une des revendications 1 à 6, **caractérisé en ce que** l'information du signal de coûts est signalée au destinataire optiquement ou acoustiquement avant, au moment de ou après la réception des données.

8. Procédé selon l'une des revendications 1 à 7, **caractérisé en ce que** le procédé est appliqué dans le service de messagerie mobile (MMS).

9. Procédé selon l'une des revendications 1 à 8, **caractérisé en ce que** le procédé est appliqué dans la norme de transmission UMTS (Universal Mobile Telecommunication System), dans le GSM (Global system for mobile communication), dans le GPRS (General packet radio service) et/ou dans l'EDGE (Enhanced Data Rates for GSM environments).

10. Procédé selon l'une des revendications 1 à 9, **caractérisé en ce que** la disposition à prendre en charge les coûts d'une ou de plusieurs réponses est déposée dans un champ d'en-tête et la durée de temps relative à la disposition à prendre les coûts en charge est déposée dans un autre champ d'en-tête.

11. Procédé selon la revendication 10, **caractérisé en ce que** le signal de coûts ou les signaux de coûts sont déposés dans les champs d'en-tête 0x1B à 0x1E.

12. Procédé selon l'une des revendications 1 à 11, **caractérisé en ce que** le signal de coûts est transmis respectivement lors de la transmission d'un jeu de données (multimedia message) de l'expéditeur (MMS user agent A) au relais MMS du fournisseur de services, dans la confirmation de la réception d'un jeu de données transmis (multimedia message) faite par le relais MMS du fournisseur de services à l'expéditeur (MMS user agent A), dans le message transmis au destinataire (MMS user agent B) par le relais MMS du fournisseur de services concernant la présence d'un nouveau jeu de données (multimedia message) ainsi que lors de la transmission d'une réponse (multimedia message) du destinataire (MMS user agent B) des données initiales au relais MMS du fournisseur de services et lorsque l'émetteur d'origine (MMS user agent A) est informé de la présence d'une réponse (multimedia message) du destinataire d'origine (MMS user agent B).

13. Procédé selon l'une des revendications 1 à 12, **caractérisé en ce que** des champs d'en-tête supplémentaires sont associés respectivement aux envois M-send.reg, M-send.conf, M-Notification.ind et M-Retrieve.conf.

14. Procédé selon la revendication 13, **caractérisé en ce que** sont associés à l'envoi M-send.req émis un champ d'entête supplémentaire pour la possibilité de l'émetteur de prendre en charge les coûts pour une ou plusieurs réponses à ses données à émettre et un champ d'en-tête supplémentaire pour déterminer la durée temporelle de la disposition à prendre les coûts en charge.

15. Procédé selon la revendication 14, **caractérisé en ce que**, dans l'envoi M-send.conf renvoyé par un fournisseur de services à l'expéditeur de données, un champ d'entête est occupé par une confirmation acceptant ou refusant (partiellement) la prise en charge des coûts pour la réponse et un champ d'en-tête est occupé par une information relative aux coûts qui seront probablement à facturer à l'expéditeur des données.

16. Procédé selon l'une des revendications 12 à 15, **caractérisé en ce que**, dans l'envoi M-Notification.ind envoyé par le fournisseur de services au destinataire, au moins un champ d'en-tête est occupé par un signal indiquant la prise en charge des coûts et indiquant, le cas échéant, une limitation de la durée de temps et/ou du nombre des réponses.

17. Procédé selon l'une des revendications 12 à 16, **caractérisé en ce que** la réponse envoyée par le destinataire au fournisseur de services contient un marquage indiquant qu'il s'agit d'une réponse à des données qui lui ont été envoyées, et une information d'identification précisant de quelles données il s'agit.

18. Procédé selon l'une des revendications 12 à 17, **caractérisé en ce que** le message adressé à l'émetteur d'origine (MMS user agent A) contient une information indiquant que l'envoi prêt à être reçu est une réponse, et une information d'identification précisant de quelles données il s'agit.

19. Procédé selon l'une des revendications précédentes, **caractérisé en ce qu'**est ajouté additionnellement à chaque signal d'identification au moins un champ d'entête dans lequel est fixé un délai pour réagir au signal d'identification.

20. Appareil de télécommunication mobile (5 ; 6) pour la facturation de coûts de transmission de données pour la transmission de messages multimédias dans un réseau de téléphonie mobile, comportant :
(a) des moyens pour associer au moins un signal de coûts à des données d'un message multimédia transmises ou à transmettre pour les coûts d'un envoi d'au moins une réponse relative aux données du message multimédia transmises, le signal de coûts contenant des informations relatives à une prise en charge des coûts pour l'au moins une réponse par l'émetteur d'origine des données ;
(b) des moyens pour attribuer une information d'identification pour le signal de coûts, grâce à laquelle l'au moins une réponse peut être associée aux données du message multimédia ;
(c) des moyens pour introduire le signal de coûts ou les signaux de coûts dans un ou plusieurs champs d'en-tête des données du message multimédia transmises ; et
(d) des moyens pour transmettre le signal de coûts ou les signaux de coûts au destinataire ou aux destinataires des données.

21. Appareil de télécommunication mobile (5 ; 6) pour la facturation de coûts de transmission de données pour la transmission de messages multimédias dans un réseau de téléphonie mobile, comportant :
(a) des moyens pour associer au moins un signal de coûts à des données d'un message multimédia transmises ou à transmettre pour les coûts d'un envoi d'au moins une réponse relative aux données du message multimédia transmises, le signal de coûts contenant des informations relatives à une prise en charge des coûts pour l'au moins une réponse par l'émetteur d'origine des données ;
(b) des moyens pour attribuer une durée de temps pour le signal de coûts, dans les limites de laquelle le destinataire d'origine peut donner gratuitement l'au moins une réponse aux données transmises ;
(c) des moyens pour introduire le signal de coûts ou les signaux de coûts dans un ou plusieurs champs d'en-tête des données du message multimédia transmises ; et
(d) des moyens pour transmettre le signal de coûts ou les signaux de coûts au destinataire ou aux destinataires des données.

22. Appareil de télécommunication mobile (5 ; 6) selon la revendication 20 ou 21, **caractérisé en ce qu'**est associé à l'appareil de télécommunication mobile (5 ; 6) un commutateur de prise en charge (16) pour octroyer une prise en charge des coûts pour une ou plusieurs réponses.

23. Appareil de télécommunication mobile selon la revendication 22, **caractérisé en ce qu'**est associé à l'appareil de télécommunication mobile (5 ; 6) un moyen de signalisation (15) pour la signalisation optique ou acoustique de la prise en charge des coûts pour une ou plusieurs réponses ainsi que pour la durée de cette prise en charge.

24. Appareil de télécommunication mobile selon l'une des revendications 22 ou 23, **caractérisé en ce que** le commutateur de prise en charge (16) est implémenté en logiciel et peut être sélectionné via un moyen de saisie.

25. Appareil de télécommunication mobile (5 ; 6) selon l'une des revendications 20 à 24, **caractérisé en ce que** lui est associé un logiciel pour occuper les champs d'entête (17 ; 18 ; 19 ; 20 ; 21) d'envois de données (9 ; 13) par un signal de coûts pour une prise en charge des coûts d'une ou de plusieurs réponses.
